# EUROPEAN PATENT APPLICATION

(11) **EP 4 847 377 A1**
(43) Date of publication of application: **02.12.2026**
(21) Application number: 24920107.0
(22) Date of filing: 08.11.2024
(51) Int. Cl.: B64C 11/02, B64D 27/34, B64U 50/19, B64U 101/61

(54) **LOCK CONTROL DEVICE**

(30) Priority: 22.01.2024 JP 2024007420
(71) Applicant: DENSO CORPORATION, Kariya-city, Aichi 448-8661 (JP)
(72) Inventor: KAWAZU, Shinsuke, Kariya-city, Aichi 4488661 (JP); SHIMIZU, Yosuke, Kariya-city, Aichi 4488661 (JP); TAKEMURA, Yuichi, Kariya-city, Aichi 4488661 (JP)
(74) Representative: TBK
(86) International application number: PCT/JP2024/039805
(87) International publication number: WO 2025/158749

(57) **Abstract**

A lock control device is applied to an eVTOL (i.e., an electric aircraft) having a passenger compartment or a luggage compartment in an airframe, which flies with a propeller that is rotated by an electric motor (61). The lock control device includes an inverter device (80) (a control device), and the inverter device (80) includes a lock control unit. The inverter device (80) is provided in plurality for one motor (61), and any one of the plurality of inverter devices (80) is capable of controlling the motor (61). The lock control unit is provided for each of the plurality of inverter devices (80), and controls a lock device that locks the propeller in a non-rotatable state. One of the plurality of the control devices performs lock control by the lock control unit in response to a request from an external device.

## Description

### CROSS REFERENCE TO RELATED APPLICATION

The present application is based on Patent Application No. 2024-007420 filed in Japan on January 22, 2024, the contents of which are incorporated by reference in their entirety.

### TECHNICAL FIELD

The disclosure herein relates to a lock control device for an electric aircraft.

### BACKGROUND ART

Patent Document 1 describes an electric aircraft that flies by rotating a propeller with an electric motor. In this type of aircraft, there are situations where it is desirable to lock the non-rotating propeller at a specific angle range. Therefore, in Patent Document 1, the aircraft is provided with a lock control unit that causes the motor to exert an electrical braking force to lock the rotation of the propeller.

### PRIOR ART DOCUMENT

### PATENT DOCUMENT

Patent Document 1: JP 2021-79869 A

### SUMMARY OF INVENTION

However, in the above-described structure, when the lock control unit fails, the propeller cannot be locked, and the lock control lacks redundancy. Even when multiple lock control units are provided to ensure redundancy, there is a concern that the control contents among the multiple lock control units may interfere with each other, resulting in control interference.

It is an object of the present disclosure to provide a lock control device that ensures redundancy in lock control while eliminating concerns about control interference.

In order to achieve the above object, a lock control device according to one aspect of the present disclosure is to be applied to an electric aircraft (10) having a passenger compartment or a luggage compartment in an airframe and being configured to fly with a propeller (20) rotated by an electric motor (61). The lock control device includes multiple control devices (80, 80A, 80B) provided for one motor, each of which is capable of controlling the one motor. In this case, each of the multiple control devices has a lock control unit (S10, S16, S16e, S10a, S10b) configured to control a lock device (100) that locks the propeller in a non-rotatable state, and one of the multiple control devices is configured to perform a lock control of the lock control unit in response to a lock request from an external device.

According to the lock control device disclosed herein, because one lock device has multiple lock control units, it is possible to achieve redundancy of the lock control units so that the lock device does not fall into an uncontrollable state. At the same time, when lock control is performed, it is performed by one control device, so that control interference, such as mutual interference between control contents of the multiple control devices, is avoidable. In other words, it is not necessary to create a control logic to prevent control interference between multiple control devices, and locking is achievable with simple control.

The reference numerals in the above parentheses are just examples of the correspondence with the specific components in the embodiments, and do not limit the technical scope of the present disclosure.

### BRIEF DESCRIPTION OF THE DRAWINGS

FIG. 1 is a diagram showing a configuration of an eVTOL according to a first embodiment;
FIG. 2 is a block diagram showing an electrical configuration of an EPU;
FIG. 3 is a schematic diagram showing a configuration of a lock device in a locked state;
FIG. 4 is a schematic diagram showing a configuration of the lock device in an unlocked state;
FIG. 5 is a flowchart showing a procedure of lock control according to a first embodiment;
FIG. 6 is a flowchart showing a procedure of lock control according to a second embodiment;
FIG. 7 is a flowchart showing a procedure of lock control according to a third embodiment;
FIG. 8 is a flowchart showing a procedure of lock control according to a fourth embodiment;
FIG. 9 is a flowchart showing a procedure for lock control according to a fifth embodiment;
FIG. 10 is a flowchart showing a procedure for lock control according to a sixth embodiment;
FIG. 11 is a flowchart showing a procedure of antifreeze control according to a seventh embodiment;
FIG. 12 is a schematic diagram showing an antifreeze heater according to an eighth embodiment;
FIG. 13 is a flowchart showing a procedure of antifreeze control according to the eighth embodiment.;
FIG. 14 is a flowchart showing a procedure of antifreeze control according to a ninth embodiment;
FIG. 15 is a flowchart showing a procedure of antifreeze control according to a tenth embodiment.;
FIG. 16 is a flowchart showing a procedure of antifreeze control according to an eleventh embodiment;
FIG. 17 is a flowchart showing a procedure of ice-break control according to a twelfth embodiment;
FIG. 18 is a time chart showing control contents when unlocking is performed without performing ice-break control according to the twelfth embodiment;
FIG. 19 is a time chart showing control contents when ice-break control is performed according to the twelfth embodiment; and
FIG. 20 is a flowchart showing a procedure for performing a function test for various controls including anti-freeze control and ice-break control in a thirteenth embodiment.

### EMBODIMENTS FOR CARRYING OUT THE INVENTION

The following will describe embodiments for carrying out the present disclosure with reference to the drawings. In each embodiment, parts corresponding to the elements described in the preceding embodiments are denoted by the same reference numerals, and redundant explanation may be omitted. When only a part of the configuration is described in each embodiment, another embodiment described previously may be applied to the other parts of the configuration. It may be possible not only to combine parts the combination of which is explicitly described in an embodiment, but also to combine parts of respective embodiments the combination of which is not explicitly described when any obstacle does not especially occur in combining the parts of the respective embodiments.

### (First Embodiment)

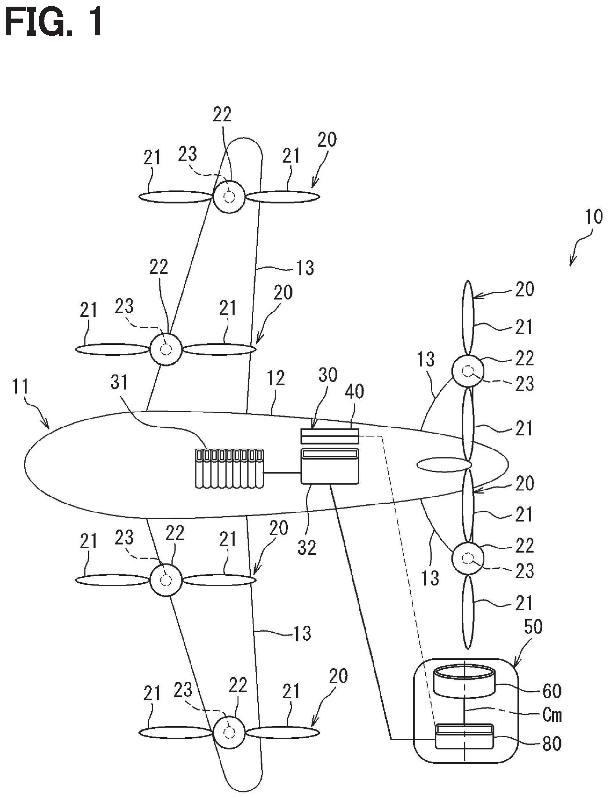

A flight system 30 shown in FIG. 1 is mounted on an eVTOL 10, which is an electric aircraft. The eVTOL 10 is an electric vertical take-off and landing aircraft, and can take off and land in a vertical direction. The eVTOL is an abbreviation of electric vertical take-off and landing aircraft. The eVTOL 10 is a manned aircraft carrying occupants. The flight system 30 is a system that drives the eVTOL 10 to fly, and includes a battery 31, a distributor 32, a flight control device 40, and an EPU 50.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has an occupant compartment for carrying occupants. Each of the wings 13 extends from the airframe main body 12, and multiple wings 13 are provided on the airframe main body 12. The wings 13 are fixed wings. The multiple wings 13 include a main wing, a tail wing, and the like.

The propellers 20 are provided on the airframe 11. The eVTOL 10 is a multicopter including at least three propellers 20. For example, at least four propellers 20 are provided on the airframe 11. The propellers 20 are provided on the airframe main body 12 and on the wings 13. Each of the propellers 20 rotates about a propeller axis thereof. The propeller axis is, for example, a center line of the propeller 20. The propeller 20 can generate thrust and lift in the eVTOL 10. The propeller 20 corresponds to a rotary wing. The propeller 20 may be referred to as a rotor.

The propeller 20 includes blades 21, a boss 22, and a propeller shaft 23. The blades 21 are arranged in a circumferential direction of the propeller axis. The boss 22 couples the multiple blades 21. Each of the blades 21 extends from the boss 22 in a radial direction of the propeller axis. The propeller shaft 23 is a rotating shaft of the propeller 20, and extends along the propeller axis from the boss 22.

The eVTOL 10 is a tilt-rotor aircraft. In the eVTOL 10, the propeller 20 can be tilted. That is, a tilt angle of the propeller 20 is adjustable. For example, when the eVTOL 10 ascends, an orientation of the propeller 20 is set such that the propeller axis extends in an up-down direction. In such case, the propeller 20 functions as a lift propeller for generating lift in the eVTOL 10. When the eVTOL 10 moves forward, the orientation of the propeller 20 is set such that the propeller axis extends in a front-rear direction. In such case, the propeller 20 functions as a cruise propeller for generating thrust in the eVTOL 10.

The battery 31 is electrically connected to the multiple EPUs 50. The battery 31 is a power supplying unit that supplies electric power to the EPUs 50, and corresponds to a power supply unit. The battery 31 is a DC voltage source that applies a DC voltage to the EPU 50. The battery 31 include a rechargeable secondary battery. Examples of the secondary battery include a lithium-ion battery, a nickel-hydrogen battery and the like. As the power supply unit, a fuel cell, a generator, or the like may also be used Further to or instead of the battery 31.

The distributor 32 is electrically connected to the battery 31 and the multiple EPUs 50. The distributor 32 distributes the electric power from the battery 31 to the multiple EPUs 50. The electric power distributed to the EPUs 50 by the distributor 32 is drive power for driving the EPUs 50.

The EPU 50 is a device that propels the eVTOL 10 by driving and rotating the propeller 20, and corresponds to an electric propulsion device. The EPU is an abbreviation of electric propulsion unit. The EPU 50 is provided individually for each of the multiple propellers 20. The EPU 50 is aligned with the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween.

The EPU 50 includes a motor device 60 and an inverter device 80. In the EPU 50, the motor device 60 and the inverter device 80 are arranged along a motor axis Cm. The motor device 60 includes a motor 61 and a motor housing. The motor housing accommodates the motor 61. The motor 61 is a rotary electric machine and is a multi-phase AC motor. The motor 61 is, for example, a three-phase motor.

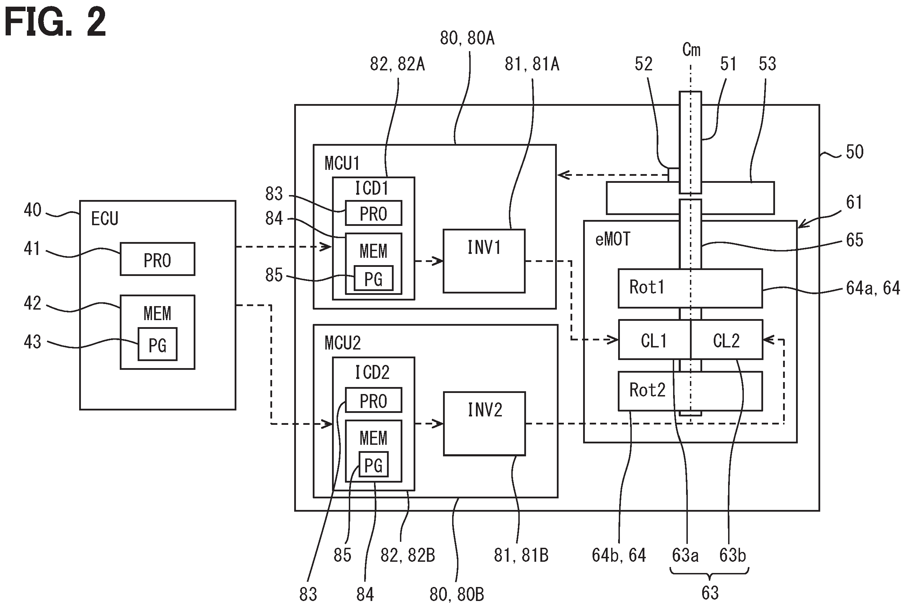

As shown in FIG. 2, the motor 61 includes a stator 63, a rotor 64, and a motor shaft 65. The stator 63 is a fixed part, and the rotor 64 is a rotating part. The motor shaft 65 is fixed to the rotor 64 and rotates together with the rotor 64. The motor 61 is an axial gap type rotary electric machine. In the motor 61, the stator 63 and the rotor 64 are arranged along the motor axis Cm.

The motor axis Cm is a rotation axis of the rotor 64. The rotor 64 rotates about the motor axis Cm. The motor axis Cm is, for example, a center line of the rotor 64. The motor axis Cm is also a center line of the motor 61 and a center line of the motor shaft 65. When referring the rotation of the rotor 64 as the rotation of the motor 61, the motor 61 rotates about the motor axis Cm.

The stator 63 has motor coils that form armature elements. The motor coils are coils of multiple phases. The motor coils are made up from a number of individual coils. The individual coils are multi-phase coils. The individual coil is an n-phase coil. "n" is a natural number. The motor coils have m pieces of individual coils. "m" is a natural number. The motor coil has m individual coils of n phases, and is an m × n phase coils. When the electric power is supplied to the m individual coils, the motor 61 is driven as an m × n phase motor. The motor 61 can be driven by supplying electric power to at least one individual coil. For example, when electric power is supplied to one individual coil, the motor 61 operates as a 1 × n phase motor.

In the present embodiment, the motor coil has two individual coils. Each of the two individual coils is a three-phase coil. Therefore, the motor coil is a six-phase coil, and the motor 61 is a six-phase motor. When only one coil is supplied with electric power, the motor coil becomes a three-phase coil and motor 61 becomes a three-phase motor.

The motor coil has, as two individual coils, a first coil 63a and a second coil 63b. The first coil 63a and the second coil 63b are each a three-phase coil. In the motor coil, the first coil 63a and the second coil 63b are arranged in the circumferential direction of rotation of the motor 61. For example, multiple coil units forming the first coil 63a and multiple coil units forming the second coil 63b are arranged alternately in the circumferential direction.

The inverter device 80 is a control device that drives the motor device 60. The inverter device 80 includes an inverter 81, an inverter control unit 82, and an inverter housing. The inverter housing is a case that houses the inverter 81 and the inverter control unit 82. The inverter 81 drives the motor 61 by converting electric power supplied to the motor 61. The inverter 81 corresponds to a power conversion unit.

The inverter 81 includes multiple electronic components such as a switching element and a capacitor element. In the inverter 81, these electronic components are mounted on a circuit board or the like. The inverter control unit 82 controls the motor 61 by controlling the inverter 81. The inverter control unit 82 includes a microcomputer and multiple electronic components such as a processor 83 and a memory 84 which are described later. In the inverter control unit 82, these electronic components are mounted on a circuit board or the like. The inverter device 80 controls the electric power supplied to the motor coil. In the inverter device 80, one inverter 81 and one inverter control unit 82 form one inverter module. The inverter 81 and the inverter control unit 82 may include a common circuit board.

The EPU 50 includes, as the inverter device 80, a first inverter device 80A and a second inverter device 80B. The first inverter device 80A includes a first inverter 81A as the inverter 81 and a first inverter control unit 82A as the inverter control unit 82. The second inverter device 80B includes a second inverter 81B as the inverter 81 and a second inverter control unit 82B as the inverter control unit 82. The first inverter control unit 82A controls the electric power supplied to the first coil 63a as motor control. The second inverter control unit 82B controls the electric power supplied to the second coil 63b as motor control.

In the EPU 50, when both of the first inverter control unit 82A and the second inverter control unit 82B perform motor control, the motor 61 is driven in six phases. In the six-phase driving, the motor 61 is driven as a six-phase motor. Further, in the EPU 50, when only one of the first inverter control unit 82A and the second inverter control unit 82B performs motor control, the motor 61 is driven in three phases. In the three-phase driving, the motor 61 is driven as a three-phase motor. The flight control device 40 can switch between six-phase drive and three-phase drive of the motor 61 by controlling the inverter control units 82A and 82B. In short, each of the two inverter control units can independently control the motor 61.

In FIG. 2, the flight control device 40 is indicated as an ECU, the processor 41 as PRO, the memory 42 as MEM, and a program 43 as PG. In the drawings, the motor device 60 is indicated as eMOT, the first coil 63a as CL1, the second coil 63b as CL2, the first rotor 64a as Rot1, and the second rotor 64b as Rot2. The first inverter device 80A is indicated as MCU1, the first inverter 81A as INV1, and the first inverter control unit 82A as ICD1. The second inverter device 80B is indicated as MCU2, the second inverter 81B as INV2, and the second inverter control unit 82B as ICD2. In the inverter control units 82A and 82B, the processor 83 is indicated as PRO, the memory 84 is indicated as MEM, and the program 85 is indicated as PG. MCU is an abbreviation of a motor control unit.

The EPU 50 includes an EPU shaft 51 and a gear 53. The EPU shaft 51 is made of a metal material or the like in a columnar shape. The EPU shaft 51 connects the motor 61 and the propeller 20. For example, the EPU shaft 51 connects the motor shaft 65 and the propeller shaft 23 via the gear 53. The EPU shaft 51 rotates about the motor axis Cm.

The EPU shaft 51 and the propeller 20 are aligned in the axial direction along the motor axis Cm. For example, the EPU shaft 51, the boss 22, and the propeller shaft 23 are aligned in the axial direction. The motor axis Cm coincides with the propeller axis.

The gear 53 mechanically connects the motor shaft 65 and the EPU shaft 51. The gear 53 transmits rotation of the motor shaft 65 to the EPU shaft 51. The gear 53 is provided, for example, at a position between the propeller 20 and the motor device 60 in the axial direction AD. The gear 53 includes a speed reducer. The gear 53 may be referred to as a gear box.

The EPU 50 includes a rotation sensor 52. The rotation sensor 52 is provided for the EPU shaft 51. The rotation sensor 52 detects a number of rotations of the EPU shaft 51. For example, the rotation sensor 52 is provided on the gear 53. The rotation sensor 52 detects the number of rotations of the EPU shaft 51 as a number of rotations of the propeller 20. The rotation sensor 52 outputs a detection signal corresponding to the number of rotations of the EPU shaft 51 to the inverter control unit 82. The rotation sensor 52 includes, for example, an encoder, a resolver and the like.

The flight control device 40 controls the inverter control unit 82. The flight control device 40 is, for example, an ECU, and performs flight control for flying the eVTOL 10. The flight control device 40 is a control device that controls the flight system 30. The ECU is an abbreviation of an electronic control unit. The flight control device 40 is mainly implemented by a computer. The computer includes the processor 41, the memory 42, an input/output interface, a bus connecting these components, and the like. The flight control device 40 performs various processes such as flight control processes for flight control and the like, by executing the control program 43 stored in the memory 42 using the processor 41.

The processor 41 is hardware for performing an arithmetic process coupled to the memory 42. The processor 41 performs various processes such as a flight control process by accessing the memory 42. The memory 42 is a storage medium that stores the control program 43 and the like. For example, the memory 42 is a non-transitory, tangible storage medium that non-temporarily stores computer readable programs and data. Also, the non-transitory, tangible storage medium serving as the memory 42 is a non-transitory, tangible storage medium, which is realized by a semiconductor memory, a magnetic disk, or the like.

The inverter control unit 82 controls the rotation of the propeller 20 by controlling the motor 61. The inverter control unit 82 performs propulsion control for propelling the eVTOL 10. The inverter control unit 82 performs propulsion control using the detection results of various sensors such as the rotation sensor 52, instruction signals from the flight control device 40, and the like. The inverter control unit 82 corresponds to a propulsion control device. The inverter control unit 82 is mainly implemented by a computer. The computer includes the processor 83, the memory 84, an input/output interface, a bus connecting these components, and the like. The inverter control unit 82 performs various processes such as propulsion control process for performing propulsion control by performing a control program 85 stored in the memory 84 using a processor 83.

The processor 83 is hardware for performing an arithmetic process coupled to the memory 84. The processor 83 performs various processes such as the flight control process by accessing the memory 84. The memory 84 is a storage medium that stores the control program 85 and the like. For example, the memory 84 is a non-transitory, tangible storage medium that non-temporarily stores computer readable programs and data. Further, the non-transitory, tangible storage medium serving as the memory 84 is a non-transitory tangible storage medium, which is realized by a semiconductor memory, a magnetic disk, or the like.

The EPU 50 includes a lock device 100. The lock device 100 can lock the propeller 20. The lock device 100 can transition between a locked state and an unlocked state. When in the locked state, the lock device 100 restricts the rotation of the propeller 20, thereby locking the propeller 20 in a non-rotatable state. The lock device 100 holds the propeller 20 at a predetermined lock angle in the locked state. The lock angle may have a predetermined angle range.

The lock device 100 does not lock the propeller 20 in the unlocked state. In the unlocked state, the lock device 100 does not restrict the rotation of the propeller 20, and permits the rotation of the propeller 20. The unlocked state is a state in which the lock of the propeller 20 is released.

The inverter control unit 82 controls the lock device 100. The inverter control unit 82 can transition the lock device 100 between the locked state and the unlocked state. The flight control device 40 outputs an instruction signal to the inverter control unit 82 to control the lock device 100 via the inverter control unit 82. The flight control device 40 controls the lock device 100 for each of the multiple EPUs 50 individually.

The flight control device 40 controls the lock device 100 according to a flight state of the eVTOL 10. For example, when the eVTOL 10 is lifted for vertical take-off or the like, the flight control device 40 causes the motor 61 to drive the propeller 20 which functions as a lift propeller to rotate. In such case, the flight control device 40 causes the lock device 100 to lock other propeller 20 which does not function as a lift propeller.

For example, the flight control device 40 locks the propellers 20 that do not function as lift propellers in a state in which they extend along a pitch axis of the airframe main body 12 (the up-down direction of a paper surface showing FIG. 1). For the propeller 20, a rotation angle in the state in which the propeller 20 extends along the pitch axis is the lock angle. By locking the propeller 20 in such manner, it is possible to avoid inconvenience such as disturbance of an air flow by the propeller 20 which does not function as a lift propeller when the eVTOL 10 is lifted.

When the eVTOL 10 cruises, the flight control device 40 causes the motor 61 to drive the propeller 20 which functions as a cruise propeller to rotate. In such case, the flight control device 40 causes the lock device 100 to lock the propeller 20 which does not function as a cruise propeller.

For example, the flight control device 40 locks the propeller 20 that does not function as a cruise propeller in a state of extending along a roll axis of the airframe main body 12 (the left-right direction of the paper surface showing FIG. 1). For the propeller 20, a rotation angle in the state in which the propeller 20 extends along the roll axis is the lock angle. By locking the propeller 20 in such manner, it is possible to avoid inconvenience such as disturbance of an air flow by the propeller 20 which does not function as a cruise propeller during cruise of the eVTOL 10.

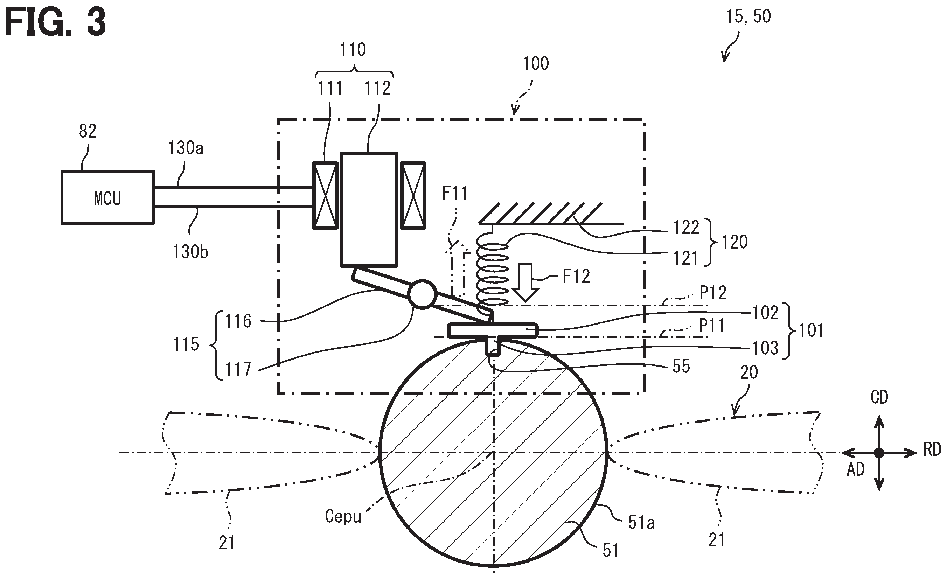

As shown in FIG. 3, the lock device 100 includes a lock pin 101, a solenoid 110, a pressing force transmission unit 115, and a pressing unit 120. The lock pin 101 restricts the rotation of the propeller 20 when engaging the EPU shaft 51. That is, the lock pin 101 is a lock member that can lock the propeller 20. The lock pin 101 corresponds to a restriction member. Note that, in FIG. 3, a circumferential direction CD is the rotation direction of the EPU shaft 51 and the propeller 20, and corresponds to a rotation direction of the propeller 20. In FIG. 3, a radial direction RD is the radial direction of both of the EPU shaft 51 and the propeller 20. In FIG. 3, an axial direction AD is the axial direction of the EPU shaft 51. The EPU axis and the motor axis Cm may coincide or may be offset from each other in the radial direction RD.

The lock pin 101 is movable between a locked position P11 and an unlocked position P12. The lock pin 101 locks the propeller 20 at the locked position P11. At the locked position P11, the lock pin 101 engages a shaft groove 55 of the EPU shaft 51 to restrict the rotation of the propeller 20. The lock pin 101 does not lock the propeller 20 at the unlocked position P12. At the unlocked position P12, the lock pin 101 does not engage the shaft groove 55, and permits the rotation of the propeller 20. The locked position P11 corresponds to a restriction position, and the unlocked position P12 corresponds to a permission position.

The shaft groove 55 is provided on the EPU shaft 51. The shaft groove 55 is a groove-shaped recess provided in a shaft outer circumferential surface 51a. The shaft outer circumferential surface 51a is an outer circumferential surface of the EPU shaft 51. The shaft groove 55 is opened toward a radially-outer side. The shaft groove 55 extends, for example, in the axial direction AD along the shaft outer circumferential surface 51a. A part of the lock pin 101 engages the shaft groove 55. For example, a pin portion 103 of the lock pin 101 engages the shaft groove 55. The shaft groove 55 engagingly receives the lock pin 101. The shaft groove 55 corresponds to a reception unit. Since the pin portion 103 enters the shaft groove 55, the propeller 20 is held at the lock angle. Note that when there is a gap between an inner wall surface of the shaft groove 55 and the pin portion 103, the lock angle has a predetermined angle range.

The lock pin 101 is made of a metal material or the like. The lock pin 101 includes a pin base 102 and the pin portion 103. The pin base 102 is formed in a plate shape, and extends, for example, along the shaft outer circumferential surface 51a. The pin portion 103 is a protrusion portion provided on a plate surface of the pin base 102. The pin portion 103 protrudes toward the radial-inner side from the pin base 102.

The lock pin 101 is movable in the radial direction RD with respect to the EPU shaft 51. The lock pin 101 is movable between the locked position P11 and the unlocked position P12 by moving in the radial direction RD. The lock pin 101 moves to the locked position P11 by approaching the EPU shaft 51 from the unlocked position P12. For the lock pin 101, a position where the pin portion 103 engages the shaft groove 55 and locks the rotation of the propeller 20 is the locked position P11. Further, a position where the pin portion 103 does not engages the shaft groove 55 and does not lock the rotation of the propeller 20 is the unlocked position P12.

The pressing unit 120 can lock the propeller 20 by mechanical energy. The pressing unit 120 can move the lock pin 101 from the unlocked position P12 to the locked position P11 by mechanical energy. The pressing unit 120 uses a restoring force of an elastic member as the mechanical energy.

The pressing unit 120 includes a pressing member 121 and a pressing support portion 122. The pressing member 121 includes an elastic member such as a spring or the like. The pressing member 121 is elastically deformable as a whole. When the lock pin 101 is positioned at the unlocked position P12, the pressing member 121 is elastically deformed. The pressing member 121 biases the lock pin 101 from the unlocked position P12 toward the locked position P11 by a mechanical pressing force F12 generated as the pressing member 121 is elastically deformed. The mechanical pressing force F12 is a restoring force of the pressing member 121. The mechanical pressing force F12 is a force based on the mechanical energy generated by the pressing member 121. The pressing member 121 presses the lock pin 101 toward the EPU shaft 51 by the mechanical pressing force F12.

The pressing support portion 122 supports the pressing member 121 in a state in which the pressing member 121 is elastically deformable. The pressing support portion 122 is fixed to the motor housing or the like of the EPU 50. Note that the pressing support portion 122 may be a part of the motor housing or the like.

The solenoid 110 can release the lock of the propeller 20 by electric energy. The solenoid 110 can move the lock pin 101 from the locked position P11 to the unlocked position P12 by the electric energy. The solenoid 110 uses electric power supplied from the battery 31 to the solenoid 110 as the electric energy. For example, the electric power of the battery 31 is supplied to the solenoid 110 via the inverter control unit 82.

The solenoid 110 includes a solenoid coil 111 and a plunger 112. In the solenoid 110, the plunger 112 is displaced as the solenoid coil 111 is energized. For example, the plunger 112 is movable along a center line of the solenoid coil 111. The plunger 112 biases the lock pin 101 from the locked position P11 toward the unlocked position P12 by an electric pressing force F11 generated as the solenoid coil 111 is energized. The electric pressing force F11 is a force generated by electromagnetic attraction force of the solenoid 110. The electromagnetic attraction force is a force generated as the solenoid 110 is excited. The solenoid 110 is excited by energizing the solenoid coil 111. The electric pressing force F11 is a force based on the electric energy generated as the solenoid coil 111 is energized. The electric pressing force F11 is larger than the mechanical pressing force F12.

Multiple energization paths that allow energization are electrically connected to the solenoid 110. The multiple energization paths include a first parallel path 130a and a second parallel path 130b. The parallel paths 130a and 130b electrically connect the inverter control unit 82 and the solenoid coil 111 to each other. The parallel paths 130a, 130b include electric wiring such as communication lines. The first parallel path 130a and the second parallel path 130b are connected in parallel to each other. The inverter control unit 82 controls the energization of the solenoid coil 111 so that a signal current Is flows through one of the first parallel path 130a and the second parallel path 130b. The solenoid 110 generates the electric pressing force F11 when the signal current Is flows through the solenoid coil 111.

Note that the solenoid coil 111 may be connected to the battery 31 so as to be electrically connected thereto without passing through the inverter control unit 82, as long as an electric current such as the signal current Is is flowable therethrough. For example, in a configuration in which the power supply between the battery 31 and the solenoid coil 111 is cut off by a predetermined switch, the opening and closing of such switch may be controlled by the inverter control unit 82.

As the solenoid coil 111 is energized, the solenoid 110 drives the lock pin 101 to move from the locked position P11 to the unlocked position P12. The solenoid coil 111 corresponds to an energization unit, and the solenoid 110 corresponds to an energization drive unit.

The pressing force transmission unit 115 transmits the pressing forces F11, F12 to the lock pin 101. For example, the mechanical pressing force F12 generated by the pressing unit 120 is applied to the lock pin 101 via the pressing force transmission unit 115. The mechanical pressing force F12 is also applied to the solenoid 110 via the pressing force transmission unit 115. Further, the electric pressing force F11 generated by the solenoid 110 is applied to the lock pin 101 via the pressing force transmission unit 115. The electric pressing force F11 is also applied to the pressing unit 120 via the pressing force transmission unit 115.

The pressing force transmission unit 115 includes a transmission plate portion 116 and a transmission shaft portion 117. The transmission plate portion 116 is rotatable with the transmission shaft portion 117 as a rotation axis. The transmission plate portion 116 rotates when the pressing forces F11, F12 are applied. For example, the transmission plate portion 116 transmits the mechanical pressing force F12 to the lock pin 101 and the solenoid 110 by rotating to one side in a circumferential direction of the transmission shaft portion 117. The transmission plate portion 116 applies the electric pressing force F11 to the lock pin 101 and the pressing unit 120 by rotating to the other side in the circumferential direction.

Next, an operation of the lock device 100 will be described.

As shown in FIG. 3, the lock device 100 is in a locked state when the solenoid coil 111 is not energized. When the solenoid coil 111 is not energized, the solenoid 110 does not generate the electric pressing force F11. That is, the plunger 112 does not bias the lock pin 101 toward the unlocked position P12. In such case, the pressing unit 120 holds the lock pin 101 at the locked position P11 by the mechanical pressing force F12. The mechanical pressing force F12 is a force capable of holding the lock pin 101 at the locked position P11. The mechanical pressing force F12 corresponds to a mechanical restriction force, and the pressing unit 120 corresponds to a mechanical restriction unit.

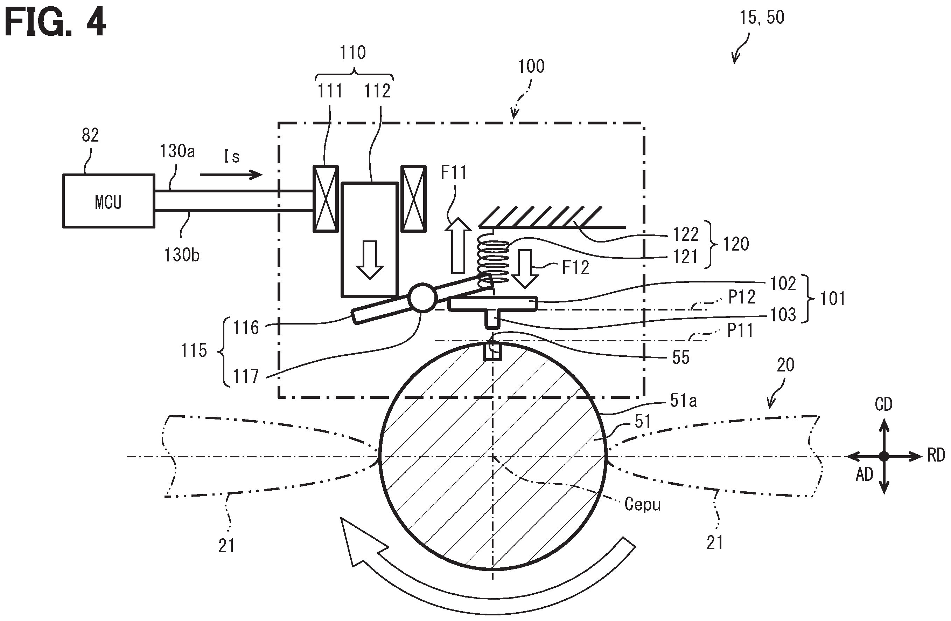

As shown in FIG. 4, the lock device 100 transitions to the unlocked state when the solenoid coil 111 is energized. When the solenoid coil 111 is energized, the solenoid 110 generates the electric pressing force F11. In such case, the plunger 112 moves the lock pin 101 from the locked position P11 to the unlocked position P12 against the mechanical pressing force F12 generated by the pressing unit 120. By continuing the energization of the solenoid coil 111, the plunger 112 holds the lock pin 101 at the unlocked position P12. The plunger 112 corresponds to an energization permission unit.

### <Propulsion Control>

Next, the propulsion control of the EPU 50 by the inverter control unit 82 will be described. First, the inverter control unit 82 acquires motor information relating to the state of the motor 61. The motor information includes a propeller rotation number and the like. For example, the propeller rotation number is a number of rotations of the propeller 20 per unit time. The inverter control unit 82 acquires the motor information using detection signals from various sensors such as the rotation sensor 52 and the like.

Next, the inverter control unit 82 determines whether or not to lock the propeller 20 based on the motor information. The inverter control unit 82 determines whether to lock the propeller 20 according to the flight state and flight schedule of the eVTOL 10. For example, when the eVTOL 10 lifts, the propeller 20 not functioning as a lift propeller is locked by the inverter control unit 82. When the eVTOL 10 lifts, the propeller 20 functioning as a lift propeller is not locked by the inverter control unit 82.

Further, when determining not to lock the propeller 20, the inverter control unit 82 determines whether or not to unlock the propeller 20. During unlocking, the lock device 100 transitions from the locked state to the unlocked state. The inverter control unit 82 determines whether to unlock the propeller 20 according to the flight state and flight schedule of the eVTOL 10. For example, when the propeller 20 that has been locked instead of functioning as a lift propeller is then used as a cruise propeller in a situation where the eVTOL 10 is planned to cruise after lifted, the lock of such propeller 20 is released.

When the inverter control unit 82 determines to lock the propeller 20, the inverter control unit 82 performs lock control to transition the lock device 100 from the unlocked state to the locked state. The lock control will be described in details later. When unlocking the propeller 20, the inverter control unit 82 performs unlock control to transition the lock device 100 from the locked state to the unlocked state.

### <Lock Control>

Next, the lock control by the inverter control unit 82 will be described. First, the inverter control unit 82 determines whether a rotation speed of the propeller 20 is sufficiently slow. For example, when the rotation speed detected by the rotation sensor 52 is slower than a preset threshold value, it is determined that the rotation speed of the propeller 20 is sufficiently slow. When the rotation sped is not sufficiently slow, the inverter control unit 82 performs a process to decelerate the rotation of the motor 61 (rotation deceleration process) so that the rotation speed of the propeller 20 slows down. In the rotation deceleration process, the motor coils are energized in a different energization pattern from that used when the motor is driven so that a magnetic field that applies a braking force to the rotor 64 is generated in the stator 63. Such an energization causes a braking force to act on the rotor 64, causing the rotation of the rotor 64 to slow down.

When the rotation speed of the propeller 20 is sufficiently slow, the inverter control unit 82 moves the lock pin 101 from the unlocked position P12 to the locked position P11. Specifically, the inverter control unit 82 performs a process of cutting off the power supply to the solenoid coil 111 so that the signal current Is does not flow through the solenoid coil 111. In such manner, the pressing unit 120 biases the lock pin 101 toward the locked position P11.

When the energization of the solenoid coil 111 is interrupted, in case that the shaft groove 55 is at a facing position of the pin portion 103, the pin portion 103 enters the shaft groove 55 by the mechanical pressing force F12. That is, the lock pin 101 engages the shaft groove 55. On the other hand, when the shaft groove 55 is not in a facing position of the pin portion 103, the lock pin 101 will be pressed against the shaft outer circumferential surface 51a by the mechanical pressing force F12. When the shaft groove 55 moving in the circumferential direction CD reaches the facing position of the pin portion 103, the pin portion 103 enters the shaft groove 55 by the mechanical pressing force F12. That is, the lock pin 101 moves to the locked position P11.

When the rotation speed of the propeller 20 is not sufficiently slow, even when the shaft groove 55 reaches the facing position of the pin portion 103, it is likely that the pin portion 103 cannot enter the shaft groove 55, and the shaft groove 55 passes the pin portion 103. On the other hand, when the rotation speed of the propeller 20 is sufficiently slow, it is less likely that the shaft groove 55 passes the pin portion 103 without being caught by the pin portion 103. That is, the lock pin 101 is easily moved to the locked position P11 by the mechanical pressing force F12.

### <Lock Completion Determination>

After performing the lock control, the inverter control unit 82 performs a lock completion determination, such as determining whether the rotation of the propeller 20 has stopped. For example, the inverter control unit 82 determines whether the propeller rotation number is zero using the detection signal of the rotation sensor 52. When the propeller rotation number is zero, the inverter control unit 82 determines that the rotation of the propeller 20 has stopped. When the propeller rotation number is not zero, the inverter control unit 82 determines that the rotation of the propeller 20 has not stopped.

Even when the completion of locking is confirmed in the lock completion determination, the inverter control unit 82 may perform a lock confirmation process described in the following. The lock confirmation process is a process for confirming that the propeller 20 does not rotate. In the lock confirmation process, assuming that the lock pin 101 is moved to the locked position P11, the motor 61 is energized such that a rotational force that does not release the engagement between the lock pin 101 and the shaft groove 55 is generated in the propeller 20. Further, in the lock confirmation process, assuming that the rotation of the propeller 20 has stopped without the move of the lock pin 101 to the locked position P11, the motor 61 is energized so that a rotational force greater than a frictional force between the pin portion 103 and the shaft outer circumferential surface 51a is generated in the propeller 20. When the lock confirmation process is performed, the lock completion determination is performed again. When it is determined in the lock completion determination that the rotation of the propeller 20 has stopped, it is considered as confirmation that the locking has been complete.

In the unlock control, the inverter control unit 82 controls the signal current Is to flow through the solenoid coil 111. In such manner, the electric pressing force F11 acts on the lock pin 101, and the lock pin 101 moves from the locked position P11 to the unlocked position P12. That is, the lock device 100 is caused to transition from the locked state to the unlocked state.

### <Divided Control Roles>

The above-described lock control, lock completion determination, and unlock control are performable either by the first inverter control unit 82A or by the second inverter control unit 82B. The flight control device 40 determines whether these controls should be performed by the inverter device. The flight control device 40 instructs the determined inverter device to perform control. The first inverter control unit 82A and the second inverter control unit 82B do not cooperate with each other to perform one of the above-mentioned various controls, but each of the inverter devices independently performs such controls. In other words, the flight control device 40 determines the divided control roles assigned to each of the first inverter control unit 82A and the second inverter control unit 82B.

For example, the lock control is performed by either one of the first inverter control unit 82A and the second inverter control unit 82B, and is not cooperatively performed by both of the inverter control units. Similarly, the lock completion determination is made by either one of the inverter control units. Similarly, the unlock control is performed by either one of the inverter control units. Further, lock maintenance control, which will be described later, is also performed by either one of the inverter control units.

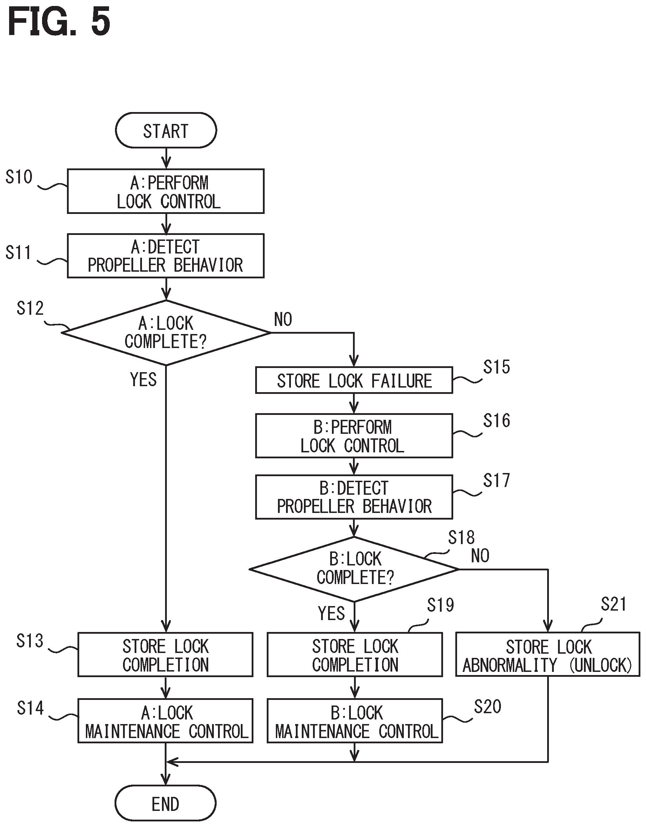

A specific example of the divided control roles will be described in details below with reference to FIG. 5. The process shown in FIG. 5 is a process in which both inverter control units perform their respective roles. When conditions for performing lock control are satisfied, the flight control device 40 issues an instruction to both inverter control units, causing both inverter control units to start performing the process shown in FIG. 5. Note that the symbol A: in the drawing indicates that a subject of performing the process is the first inverter control unit 82A, and the symbol B: in the drawing indicates that a subject of performing the process is the second inverter control unit 82B.

First, in step S10 of FIG. 5, one of the two inverter control units performs lock control. In the present embodiment, the first inverter control unit 82A bears a role of performing the lock control. Subsequently, in step S11, the first inverter control unit 82A detects the behavior of the propeller 20. Specifically, the number of rotations of the propeller 20 is calculated based on the detection signal of the rotation sensor 52. Subsequently, in step S12, the first inverter control unit 82A performs a lock completion determination.

When it is determined in step S12 that the locking has been complete, the process proceeds to step S13 where the lock completion is stored. The storage location may be the memory 84 of the inverter device 80 or the memory 42 of the flight control device 40. In the present embodiment, the lock completion information is stored in the memory 42 of the flight control device 40, but it may be stored in multiple memories.

Subsequently, in step S14, the first inverter control unit 82A performs lock maintenance control. In the lock maintenance control, the inverter control unit 82 controls the operation of the lock device 100 to maintain the locked state. Specifically, in the lock maintenance control, the stop of energization to the solenoid coil 111 is continued so that the signal current Is does not flow to the solenoid coil 111.

In short, from among the two inverter control units, the same inverter control unit that performed the lock control in step S10 bears the roles of propeller behavior detection, lock completion determination, and lock maintenance control.

On the other hand, when it is determined in step S12 that the locking has not been complete, then in step S15, information indicating that the locking has failed is stored. The storage location may be the memory 84 of the inverter device 80 or the memory 42 of the flight control device 40. In the present embodiment, the memory 84 of the inverter device 80 stores information indicating that the locking has failed. That is, from among the two inverter control units, the memory 84 of the inverter device that has performed the lock completion determination stores information indicating that locking has failed.

Subsequently, in step S16, the inverter device that has not performed the lock control in step S10, among the two inverter control units, performs the lock control. That is, in the present embodiment, the second inverter control unit 82B performs the lock control in step S16. Note that a request to change the inverter control unit 82 that performs lock control is output from the flight control device 40 to the inverter control unit 82, as described above. Subsequently, in step S17, the second inverter control unit 82B detects the behavior of the propeller 20. Subsequently, in step S18, the second inverter control unit 82B performs a lock completion determination.

When it is determined in step S18 that the locking has been complete, the process proceeds to step S19, where information on the completion of the locking is stored. The storage location of such information may be anywhere, but in the present embodiment, information on the completion of locking is stored in the memory 42 of the flight control device 40 in the same manner as in step S13. Subsequently, in step S20, the second inverter control unit 82B performs a lock maintenance control. In the lock maintenance control, the inverter control unit 82 controls the operation of the lock device 100 to maintain the locked state.

In short, from among the two inverter control units, the same inverter control unit that has performed the lock control in step S16 bears the roles of propeller behavior detection, lock completion determination, and lock maintenance control.

On the other hand, when it is determined in step S18 that the locking has not been complete, the process proceeds to step S21, where information is stored regarding a situation that a lock abnormality to stay in an unlocked state is caused. The storage location of such information may be anywhere, but similar to step S13, the information on the lock abnormality is stored in the memory 42 of the flight control device 40.

As described above, in the process of FIG. 5, one of the two inverter control units performs lock control. As a result, when lock fails, the other of the two inverter control units performs lock control. In other words, the two inverter control units do not cooperate to perform the lock control, and while one control unit is performing the lock control, the other control unit is prohibited from performing the lock control. For example, assuming that, contrary to the present embodiment, both inverter control units simultaneously flow the signal current Is to the solenoid coil 111, so that the two inverter control units cooperate to perform the unlock control. In such case, when causing the lock control to be performed, both of the two inverter control units must interrupt the signal current Is, and therefore the lock control is performed in cooperation with each other. In the present embodiment, by prohibiting such cooperative unlock control, the cooperative lock control is also prohibited.

The lock maintenance control is also performed by one of the inverter control units in the same manner as the lock control. In other words, while one control unit is performing the lock maintenance control, the other control unit is prohibited from performing the lock maintenance control. Note that the first inverter device 80A and the second inverter device 80B that perform such lock control correspond to a lock control device.

### <Operations and Effects of The First Embodiment>

In the present embodiment, the first inverter control unit 82A when performing the process of step S10 in FIG. 5 and the second inverter control unit 82B when performing the process of step S16 correspond to a lock control unit. That is, each of the multiple inverter control units 82 has a lock control unit. In response to a lock request from the flight control device 40 external to the EPU 50, one of the multiple inverter control units 82 performs the lock control using the lock control unit.

According to the above, since one lock device 100 has multiple lock control units, it is possible to achieve redundancy of the lock control units so that the lock device 100 does not fall into an uncontrollable state. At the same time, when the lock control is performed, it is performed by one inverter control unit, so that control interference, such as mutual interference between the control contents of the multiple inverter control units 82, is avoidable. In other words, it is not necessary to create a control logic to prevent control interference among the multiple inverter control units 82, and locking is performable with simple control.

Further, in the present embodiment, when the first inverter device 80A among the multiple inverter devices 80 (control devices) performs the lock control and the locking is not complete normally, the second inverter device 80B performs the lock control. According to the above, when locking fails due to an abnormality in the first inverter device 80A even in case that the lock device 100 is normal, there is a possibility that locking can be complete normally by the lock control performed by the second inverter device 80B. Thus, the possibility of encountering a situation where locking is not performable can be reduced.

Further, in the present embodiment, the first inverter control unit 82A when performing the process of step S14 in FIG. 5 and the second inverter control unit 82B when performing the process of step S20 in FIG. 5 correspond to a lock maintenance control unit. That is, each of the multiple inverter control units 82 has a lock maintenance control unit, and when locking by the lock control is complete normally, the lock maintenance control is performed by the lock maintenance control unit. According to the above, since one lock device 100 has multiple lock maintenance control units, it is possible to achieve redundancy in the lock maintenance control to prevent a situation where the lock maintenance is not performable.

Further, in the present embodiment, any one of the multiple inverter control units 82 performs the lock maintenance control by the lock maintenance control unit. According to the above, when performing the lock maintenance control, the lock maintenance control is performed by one inverter device 80 (control device), thereby it is not necessary to configure control logic to prevent control interference, and lock maintenance is performable with simple control.

Further, in the present embodiment, when the solenoid coil 111 is energized, the lock pin 101 moves from the locked position P11 to the unlocked position P12. On the other hand, since an elastic deformation force of the pressing member 121 is used to move the lock pin 101 from the unlocked position P12 to the locked position P11, no electric current is required for such operation. Therefore, electric power consumption during locking can be reduced.

### (Second Embodiment)

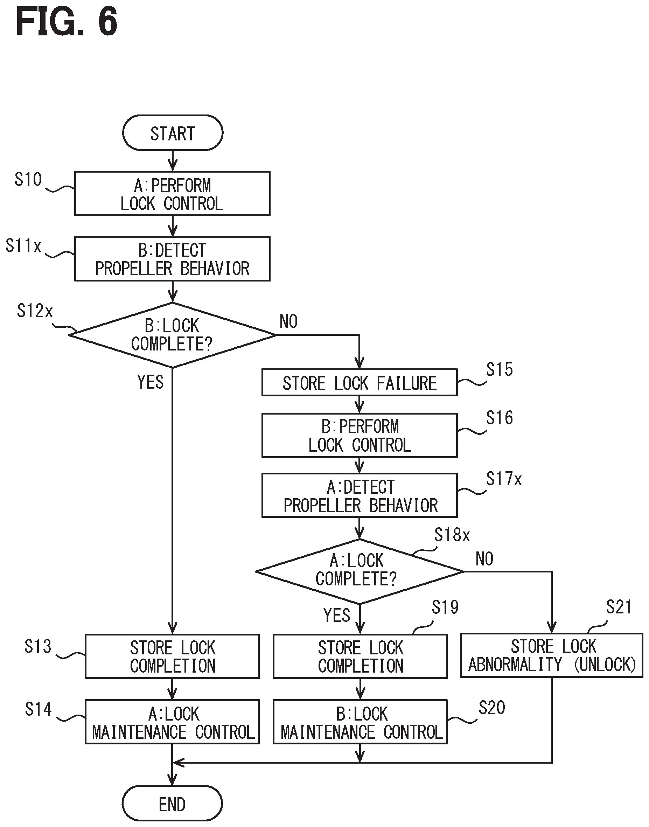

In the first embodiment described above, from among the first inverter control unit 82A and the second inverter control unit 82B, the same inverter control unit that performed the lock control in step S10 bears the roles of the propeller behavior detection and the lock completion determination. In contrast to the above, in the present embodiment, a control unit different from the inverter control unit that performed the lock control in step S10 bears the roles of the propeller behavior detection and the lock completion determination. Specifically, steps S11, S12, S17, and S18 in FIG. 5 according to the first embodiment are changed to steps S11x, S12x, S17x, and S18x in FIG. 6 in the present embodiment. Further, for processes in the drawings where the reference numerals are the same as those in other drawings, the explanations thereof may be cited.

In the control shown in FIG. 6, first, in step S10, the first inverter control unit 82A performs lock control. Subsequently, in step S11x, the second inverter control unit 82B, which is a control unit different from the control unit that performed the lock control, detects the behavior of the propeller 20. Subsequently, in step S12x, the second inverter control unit 82B, which is a control unit different from the control unit that performed the lock control, performs a lock completion determination.

Further, when it is determined in step S12x that the locking has failed, the second inverter control unit 82B performs the lock control in step S16. In such case, subsequently in step S17x, the first inverter control unit 82A, which is a control unit different from the control unit that performed the lock control in step S16, detects the behavior of the propeller 20. Subsequently, in step S18x, the first inverter control unit 82A, which is a control unit different from the control unit that performed the lock control, performs a lock completion determination.

In the present embodiment, from among the multiple inverter devices 80 (control devices), the first inverter device 80A performs the lock control, and the second inverter device 80B, which is different from the first inverter device, determines whether locking by the lock control has been complete normally. Here, contrary to the present embodiment, when the same control device that performed the lock control performs the lock completion determination, there is a risk of mis-determination that locking is complete even though locking is not achieved, because that control device may have an abnormality caused therein. Therefore, according to the present embodiment, the above-mentioned risk can be reduced, and a more objective and accurate lock completion determination is made possible.

Further, in the present embodiment, from among the multiple inverter devices 80 (control devices), the first inverter device 80A performs the lock control, and the second inverter device 80B, which is different from the first inverter device, performs the propeller behavior detection. According to the above, a more objective and accurate propeller behavior detection is performable, compared to the one that is performed by the same control device having performed the lock control.

### (Third Embodiment)

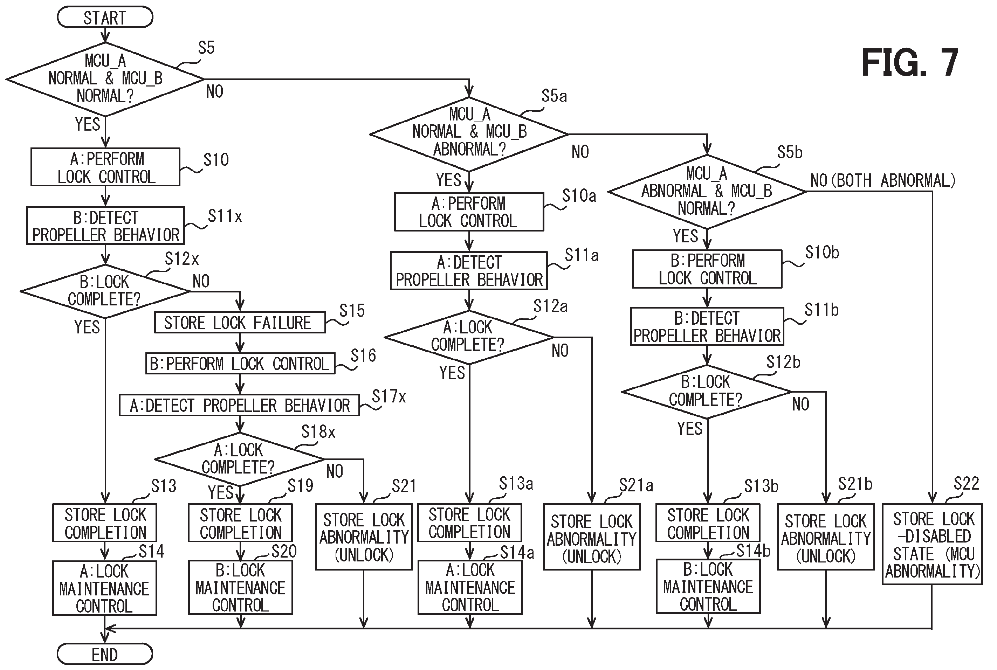

In the present embodiment, the presence or absence of an abnormality is determined for each of the multiple inverter devices 80 (control devices). Then, according to the determination result, the control device that performs various processes such as lock control is changed. Specifically, as shown in FIG. 7, first, in step S5, it is determined whether or not both of the first inverter control unit 82A and the second inverter control unit 82B are normal. Note that, in the drawing, MCU_A indicates the first inverter device 80A, and MCU_B indicates the second inverter device 80B.

When it is determined that both of the first inverter control unit 82A and the second inverter control unit 82B are normal, the processes from step S10 onwards are carried out in the same manner as in FIG. 6. When it is determined that at least one of the two is not normal, then in step S5a, it is determined whether the first inverter control unit 82A is normal and the second inverter control unit 82B is abnormal. When the determination in step S5a is negative, the process proceeds to step S5b, where it is determined whether the first inverter control unit 82A is abnormal and the second inverter control unit 82B is normal.

When the determination in step S5a is affirmative, then in step S10a, the first inverter control unit 82A, which is the normal control unit, performs the lock control. Subsequently, in step S11a, the first inverter control unit 82A, which is the normal control unit, also performs the propeller behavior detection. Subsequently, in step S12a, the first inverter control unit 82A, which is the normal control unit, also performs the lock completion determination.

When it is determined in step S12a that locking has been complete, the flight control device 40 stores the information that locking has been complete subsequently in step S13a. Subsequently, in step S14a, the first inverter control unit 82A, which is the normal control unit, performs the lock maintenance control. On the other hand, when it is determined in step S12a that locking has not been complete, the flight control device 40 stores information subsequently in step S21a that a lock abnormality to stay in an unlocked state is caused.

When a negative determination is made in step S5a and an affirmative determination is made subsequently in step S5b, then in step S10b, the second inverter control unit 82B, which is the normal control unit, performs the lock control. Subsequently, in step S11b, the second inverter control unit 82B, which is the normal control unit, also performs the propeller behavior detection. Subsequently, in step S12b, the second inverter control unit 82B, which is the normal control unit, also performs the lock completion determination.

When a negative determination is made in both step S5a and step S5b, the flight control device 40 stores information indicating a lock-disabled state subsequently in step S22. Note that the information that both of the first inverter control unit 82A and the second inverter control unit 82B are in an abnormal state may be stored together with the information that they are in a lock-disabled state.

As described above, in the present embodiment, when an abnormal control unit is present, the lock control, the propeller behavior detection, the lock completion determination, and the lock maintenance control are performed using a normal control unit without using that abnormal control unit. In such manner, the reliability of correctly performing these controls is improvable.

### (Fourth Embodiment)

In each of the above embodiments, one lock device 100 is provided for one EPU 50. In contrast to the above, in the present embodiment, a single EPU 50 is provided with multiple lock devices. The lock device 100 described above corresponds to a first lock device, and in the present embodiment, a second lock device is further provided. The first lock device can be said to be a device that mechanically locks a propeller 20 by using a lock pin 101 as a lock member to inhibit rotation of the propeller 20. In contrast to the above, the second lock device is a device that locks the propeller 20 by the electrical braking force of a motor 61.

The second lock device is provided by an inverter device 80 which controls the motor 61 as follows. That is, the inverter device 80 energizes motor coils in a different energization pattern from that when the motor is driven to generate a magnetic field in a stator 63 that applies a braking force to a rotor 64. The energization causes a braking force to act on the rotor 64, causing the rotation of the rotor 64 to slow down and come to a stop. The inverter device 80 during such stop control corresponds to a second lock device.

Further, the inverter device 80 can also perform stop maintenance control, which energizes the motor coil to apply a braking force to the rotor 64 that is stopped from rotating. The stop maintenance control makes it possible to maintain the propeller 20 at a predetermined lock angle. In the stop maintenance control, feedback control may be continued with a lock position that is set as a target position of the feedback control.

The "lock control" and "lock maintenance control" described in the above embodiments are described as "mechanical lock control" and "mechanical lock maintenance control" by the first lock device in the present embodiment. Further, in the present embodiment, the stop control by the second lock device is described as "electrical lock control," and the stop maintenance control by the second lock device is described as "electrical lock maintenance control." In the present embodiment, both of the first inverter 81A and the second inverter 81B are capable of performing the stop control and the stop maintenance control.

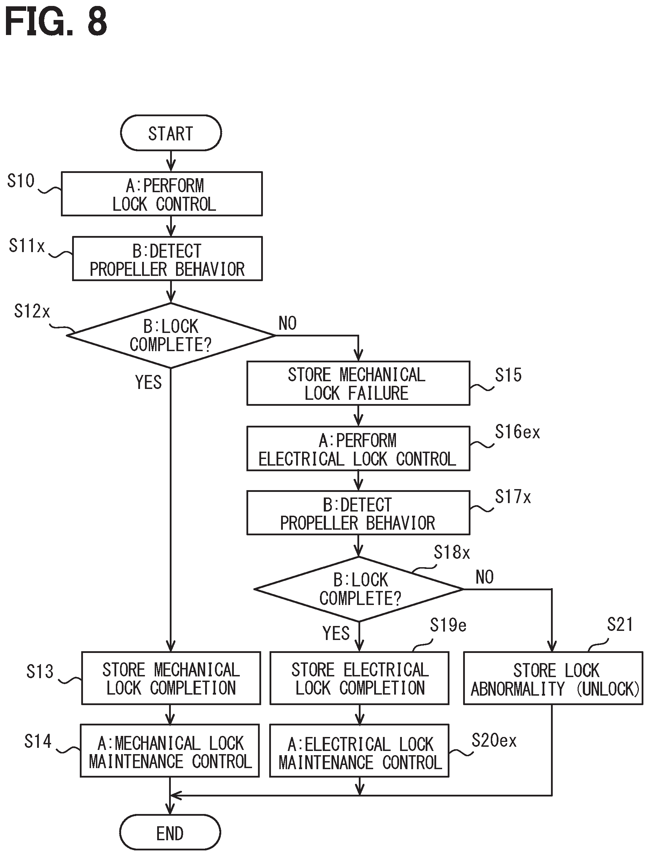

A specific example of the divided control roles according to the present embodiment will be described in details below with reference to FIG. 8. The process shown in FIG. 8 is a process in which both of the two inverter control units perform their respective roles. Further, for processes in the drawings where the reference numerals are the same as those in other drawings, the explanations thereof may be cited.

First, in step S10 of FIG. 8, one of the two inverter control units performs the mechanical lock control. In the present embodiment, a first inverter control unit 82A bears a role of performing the mechanical lock control. Subsequently, in step S11x, a second inverter control unit 82B, which is a control unit different from the control unit that performed the mechanical lock control, detects the behavior of the propeller 20. Subsequently, in step S12x, the second inverter control unit 82B also performs the determination as to whether the mechanical lock has been complete.

When it is determined in step S12x that the mechanical lock has been complete, a flight control device 40 stores the information that the mechanical lock has been complete subsequently in step S13. Subsequently, in step S14, the first inverter control unit 82A performs the mechanical lock maintenance control.

On the other hand, when it is determined in step S12x that the mechanical lock has not been complete, the process proceeds to the next step S15, where information indicating that the mechanical lock has failed is stored. Subsequently, in step S16ex, the first inverter control unit 82A, which is the same control unit that performed the mechanical lock control, performs the electrical lock control. Subsequently, in step S17ex, the second inverter control unit 82B, which is a control unit different from the control unit that performed the electrical lock control, detects the behavior of the propeller 20. Subsequently, in step S18x, the second inverter control unit 82B, which is a control unit different from the control unit that performed the electrical lock control, performs a determination as to whether the electrical lock has been complete.

Further, when it is determined in step S12x that the locking has failed, the second inverter control unit 82B performs the lock control in step S16. In such case, subsequently in step S17x, the first inverter control unit 82A, which is a control unit different from the control unit that performed the lock control in step S16, detects the behavior of the propeller 20. Subsequently, in step S18x, the first inverter control unit 82A, which is a control unit different from the control unit that performed the lock control, performs a lock completion determination.

When it is determined in step S18x that the electrical lock has been complete, information regarding the completion of the electrical lock is stored subsequently in step S19e. Subsequently, in step S20ex, the first inverter control unit 82A, which is the same control unit that performed the electrical lock control, performs the electrical lock maintenance control. In short, from among the two inverter control units, the inverter control unit that performs the electrical lock control in step S16ex also bears a role of performing the electrical lock maintenance control.

In short, the first inverter control unit 82A bears the roles of mechanical lock control, the electrical lock control, the mechanical lock maintenance control, and the electrical lock maintenance control. The second inverter control unit 82B bears the roles of the propeller behavior detection and the lock completion determination. However, when both of the mechanical lock control and the electrical lock control by the first inverter control unit 82A fail, the mechanical lock control by the second inverter control unit 82B may be performed thereafter. When the control by the second inverter control unit 82B also fails, the electrical lock control by the second inverter control unit 82B may be performed.

In such manner, in the present embodiment, multiple lock devices are provided for one propeller 20. Further, at least one lock control unit is capable of performing the lock control for multiple lock devices. Further, when locking is not complete normally as a result of performing the lock control for a first lock device among the multiple lock devices, lock control is performed for a second lock device. Therefore, the lock device is made redundant, and reliable lock control is performable.

Further, in the present embodiment, the first lock device is a device that mechanically locks the propeller 20 by using the lock pin 101 (lock member) to inhibit rotation of the propeller 20. The second lock device is a device that locks the propeller 20 by the electrical braking force of the motor 61. Since a mechanical lock device requires less energy to lock than an electrical lock device, the present embodiment, in which the mechanical lock device is activated with priority over the electrical lock device, allows locking to be performed with less energy.

Further, in the present embodiment, when the lock control for the first lock device is performed by the first inverter control unit 82A, the subsequent lock control for the second lock device is also performed by the first inverter control unit 82A. Therefore, redundancy of the lock control is ensured with one inverter control unit.

### (Fifth Embodiment)

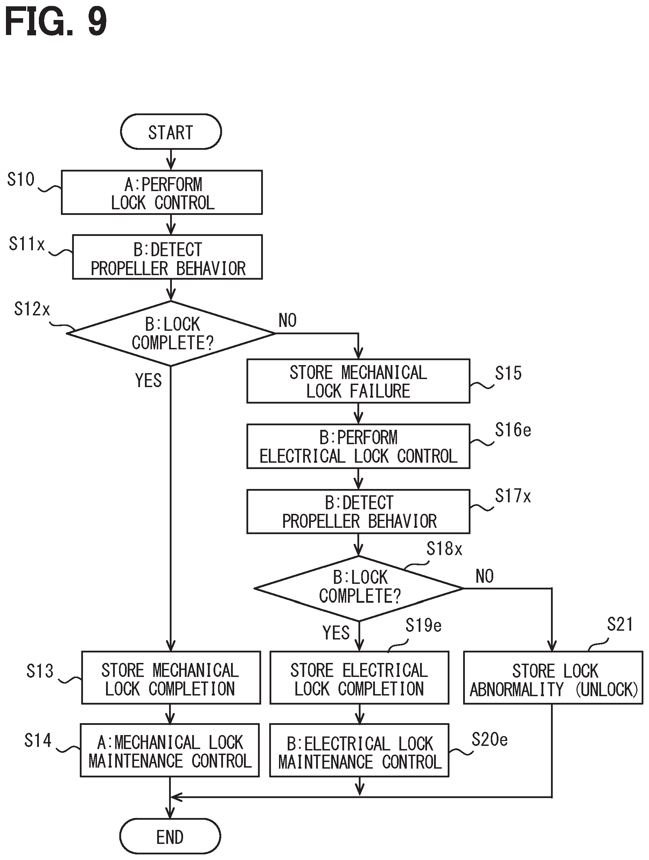

In the fourth embodiment described above, when the mechanical lock control is performed and then the electrical lock control is performed, both of these lock controls are performed by the same control unit. In contrast to the above, in the present embodiment, the control unit that performs the mechanical lock control is different from the control unit that performs the subsequent electrical lock control. Specifically, steps S16ex and S20ex in FIG. 8 according to the fourth embodiment are changed to steps S16e and S20e in FIG. 9 in the present embodiment. Further, for processes in the drawings where the reference numerals are the same as those in other drawings, the explanations thereof may be cited.

In steps S16ex and S20ex of FIG. 8 according to the fourth embodiment, the first inverter control unit 82A, which is the same control unit that performed the mechanical lock control in step S10, performs the electrical lock control and the electrical lock maintenance control. In contrast, in the present embodiment, in steps S16e and S20e shown in FIG. 9, the second inverter control unit 82B, which is different from the control unit that performed the mechanical lock control in step S10, performs the electrical lock control and the electrical lock maintenance control.

In short, in the present embodiment, when a first control device among the multiple control devices performs the lock control for a first lock device and the locking is not complete normally, a second control device performs the lock control for a second lock device. That is, when the first lock control fails, both of the control device and the lock device are switched and a second lock control is attempted. Therefore, even when the cause of the first lock control failure is the control device or the lock device, the possibility of success in subsequent lock controls is increasable.

Further, in the present embodiment, the first lock control is a mechanical lock control, and the second lock control is an electrical lock control. In such manner, according to the present embodiment in which the mechanical lock device is operated with priority over the electrical lock device, locking is performable with less energy.

### (Sixth Embodiment)

In each of the above-described embodiments, any one of the multiple inverter control units 82 performs the lock control by the lock control unit. In contrast, in the present embodiment, multiple inverter control units 82 simultaneously cooperate to perform the lock control. Further, in the lock maintenance control according to the present embodiment, first, either one of the control units independently performs the lock maintenance control. When maintaining the lock fails, the other control unit independently attempts to perform the lock control a second time.

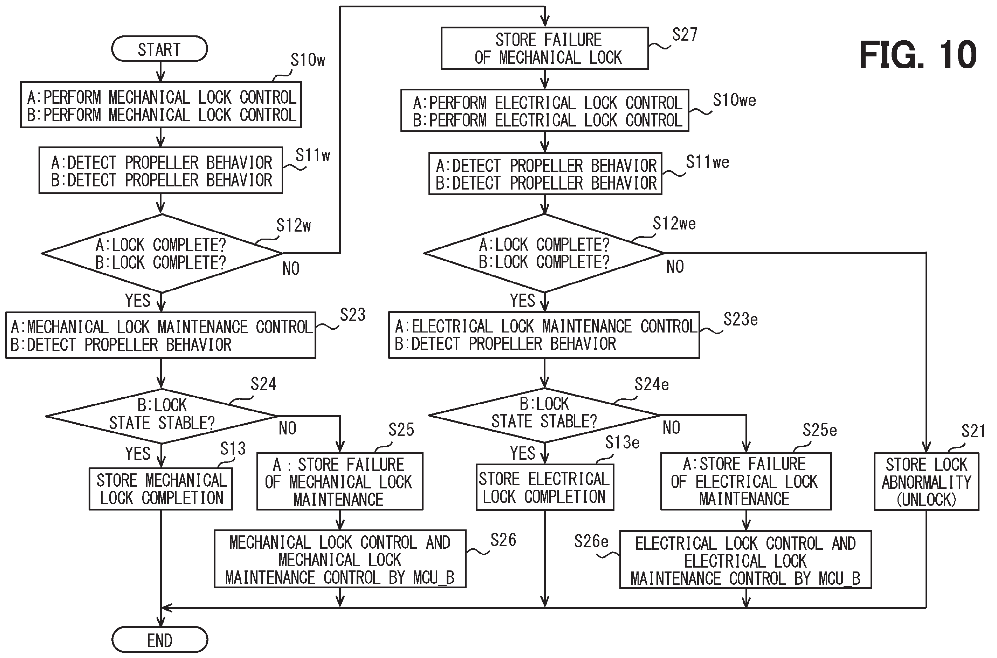

A specific example of the control flow shown in FIG. 10 will be described below regarding the lock control and the lock maintenance control according to the present embodiment. Further, for processes in the drawings where the reference numerals are the same as those in other drawings, the explanations thereof may be cited.

First, in step S10w of FIG. 10, both of a first inverter control unit 82A and a second inverter control unit 82B simultaneously perform the mechanical lock control cooperatively. Subsequently, in step S11w, both of the first inverter control unit 82A and the second inverter control unit 82B independently detect the propeller behavior. That is, both control units acquire the detection signal output from a rotation sensor 52, and each control unit calculates the number of rotations of a propeller 20.

Subsequently, in step S12w, both of the first inverter control unit 82A and the second inverter control unit 82B independently make a provisional determination as to whether or not locking has been complete. In step S12w, when it is provisionally determined that locking is complete in both of control units, it is finally determined that locking is actually complete. When it is provisionally determined that locking is incomplete in at least one of the control units, it is determined that locking has failed. In such manner, a risk of erroneously determining that locking is complete when locking is not complete can be reduced. Note that, when it is desired to reduce the risk of erroneously determining that locking has failed even when locking has actually been complete, it may be finally determined that locking has actually been complete when at least one of the control units has provisionally determined that locking has been complete.

When it is determined in step S12w that locking has been complete, then in step S23, mechanical lock maintenance control and monitoring of propeller behavior are performed. Regarding the mechanical lock maintenance control, the first inverter control unit 82A independently performs such control. Regarding the monitoring of the propeller behavior, the second inverter control unit 82B independently performs such control.

Subsequently, in step S24, it is determined whether a locked state is stable. Such determination is made by the second inverter control unit 82B, which is the control unit that monitored the propeller behavior, based on the monitoring results of the propeller behavior. When it is determined that the locked state is not stable, the process proceeds to step S25, where information on a mechanical lock failure is stored.

Subsequently, in step S26, a control unit different from the control unit that performed the mechanical lock control in step S23 performs the mechanical lock control and the mechanical lock maintenance control. That is, the second inverter control unit 82B performs the mechanical lock control and the mechanical lock maintenance control.

On the other hand, when it is determined in step S12w that the locking has not been complete (locking has failed), then in step S27, the information that the locking has failed is stored. Subsequently, in step S10we, both of the first inverter control unit 82A and the second inverter control unit 82B simultaneously perform the electrical lock control cooperatively. Subsequently, in step S11we, both of the control units independently detect the behavior of the propellers.

Subsequently, in step S12we, similar to the above-described step S12w, both of the control units independently make a provisional determination as to whether or not the locking has been complete. For example, when it is provisionally determined that locking is complete in both of the control units, it is finally determined that locking is actually complete.

When it is determined in step S12we that the locking has been complete, the electric lock maintenance control and monitoring of the propeller behavior are performed subsequently in step S23e. Regarding the electric lock maintenance control, the first inverter control unit 82A independently performs such control. Regarding the monitoring of the propeller behavior, the second inverter control unit 82B independently performs such control.

Subsequently, in step S24e, the second inverter control unit 82B determines whether the locked state is stable based on the results of monitoring of the propeller behavior. When it is determined that the locked state is not stable, the process proceeds to step S25e, where information on a failure of the electrical lock is stored.

Subsequently, in step S26e, a control unit different from the control unit that performed the electrical lock control in step S23e performs the electrical lock control and the electric lock maintenance control. That is, the second inverter control unit 82B performs the electrical lock control and the electric lock maintenance control. When it is determined in step S12we that the locking has not been complete (locking has failed), information regarding a situation that a lock abnormality to stay in an unlocked state is caused is stored subsequently in step S21.

As described above, in the present embodiment, a first inverter device 80A and a second inverter device 80B simultaneously perform lock control cooperatively, thereby improving the reliability of locking. Further, since both of the inverter devices cooperate to determine whether locking has been complete, the risk of erroneously determining that the locking has been complete when the locking has not been complete can be reduced.

Further, in the present embodiment, when failing to maintain lock thereby being unlocked as a result of a situation where the first inverter device 80A among the multiple inverter devices 80 (control devices) has performed the lock maintenance control, the second inverter device 80B performs the lock control. Therefore, the reliability of the lock is improvable.

### (Seventh Embodiment)

When a propeller 20 is kept stopped from rotating by the lock maintenance control for a long time, i.e., when a stopped state is maintained for a long period of time, there is a concern of freezing, as exemplified below. That is, there is a concern that moisture adhering between a lock pin 101 and a shaft groove 55 will freeze, making it impossible to unlock. In other words, there is a concern that the lock pin 101 and the shaft groove 55 may become stuck due to the ice, and, as a result, that the lock pin 101 will not be disengaged from the shaft groove 55 even when a solenoid coil 111 is energized to generate an electric pressing force F11.

There is also a concern that moisture adhering to bearings supporting an EPU shaft 51 and a motor shaft 65 freezes, making it impossible to resume rotation of the propeller 20. In short, there is a concern that mechanical operating parts such as a lock device 100, bearings and the like freeze and cause malfunction.

Further to these mechanical operating parts, there is also a concern that liquid refrigerant that cools a motor device 60 and an inverter device 80 freeze. When the rotation of the propeller 20 is stopped, the motor device 60 and the inverter device 80 are also stopped, which makes it unnecessary to circulate the liquid refrigerant with a pump. Therefore, when the rotation of the propeller 20 stops, there is a concern that the liquid refrigerant may freeze.

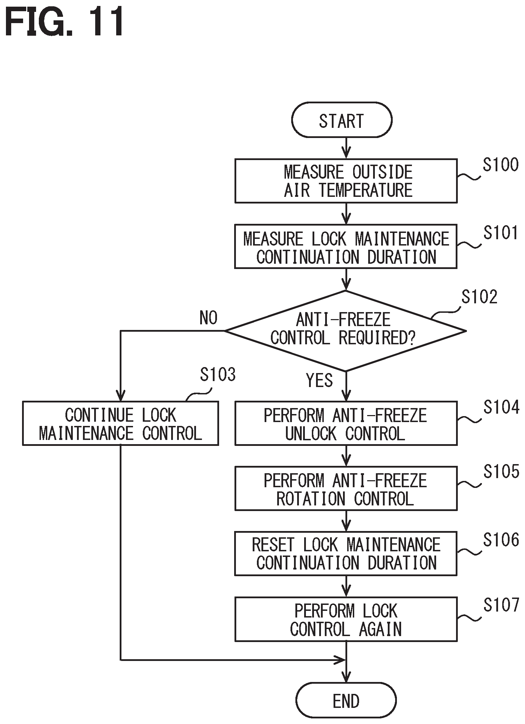

The present and the following embodiments aim to solve the above-mentioned problem, that is, the problem of freezing that occurs when locking is maintained. In the present embodiment, the inverter device 80 performs the process shown in FIG. 11 to solve the above-described problem. Note that the process of FIG. 11 is performed by either a first inverter control unit 82A or a second inverter control unit 82B. The process of FIG. 11 is continuously performed during a period in which the lock maintenance control is being required.

In the process shown in FIG. 11, first, outside air temperature is measured in step S100. Subsequently, in step S101, a lock maintenance continuation duration, which is a time during which the lock maintenance control is continued, is measured. Subsequently, in step S102, it is determined whether or not anti-freeze control is required based on the outside air temperature and the lock maintenance continuation duration acquired by the above-mentioned measurements. The anti-freeze control is a control for preventing freezing before it occurs.

For example, when the outside air temperature is 0 degree of Celsius or lower and the lock maintenance continuation duration is equal to or longer than a predetermined period of time, it is determined that the anti-freeze control is required. Further to the outside air temperature and the lock maintenance continuation duration, humidity, weather (rain, etc.), and the like may also be added to the determination conditions in step S102. Also, the duration of the predetermined period of time used for the above determination may be changed according to the outside air temperature, humidity, weather (rain, etc.), and the like. Since freezing occurs more easily at low temperatures and high humidity, the predetermined period of time may be set to a shorter time at low temperatures and high humidity, for example.

When it is determined in step S102 that the anti-freeze control is not required, the lock maintenance control is continued subsequently in step S103. On the other hand, when it is determined that the anti-freeze control is required, the anti-freeze control is performed subsequently in steps S104 and S105. The inverter control unit 82 when performing the processes of steps S104 and S105 corresponds to an "anti-freeze control unit."

In step S104 relating to the anti-freeze control, the unlock control is performed. That is, by controlling a signal current Is to flow through a solenoid coil 111, the lock pin 101 is disengaged from the shaft groove 55.

Here, in a flight state where it is desired to lock the propeller 20 within a specific angle range, a flight control device 40 instructs the inverter device 80 to perform the lock control. Then, when a request for the lock control is diminished, the flight control device 40 outputs an unlock instruction to the inverter device 80. Unlike a normal unlocking, the process performed in step S104 is an anti-freeze unlock control for preventing freezing. The anti-freeze unlock control is performed when a lock instruction is being output from the flight control device 40 to the inverter device 80.

Thereafter, in step S105 relating to the anti-freeze control, rotation control is performed to drive the motor device 60 and to rotate the propeller 20. In the rotation control, the motor device 60 is rotated while minimizing the impact on the flight state. For example, the motor device 60 may be driven to vibrate by alternately rotating forward and backward. Alternatively, the motor device 60 may be rotated in one direction at an extremely slow speed. Alternatively, when an EPU 50 has a pitch angle adjuster device, the motor device 60 may be driven with the pitch angle adjusted to the minimum.

The pitch angle adjuster device is a device that changes the pitch angle of blades 21 to adjust the angle to an optimum one. When the pitch angle is changed, the rotational resistance of the blades 21 against the air changes, and the rotational torque of the propeller 20 changes. In the rotation control in step S105, it is desirable to minimize the pitch angle to minimize the rotational resistance. In such manner, the impact of the anti-freeze control on an aircraft posture and energy consumption is minimized.

In short, in the anti-freeze control in steps S104 and S105, the lock maintenance control is temporarily released while a lock instruction is being output from the flight control device 40. Then, the propeller 20 is operated while minimizing the impact on the flight state. The rotation control in step S105 is performed for a predetermined period of time or a predetermined number of times, and thereafter, the energization to the motor device 60 is stopped, for stopping the rotation of the propeller 20.

Subsequently, in step S106, the lock maintenance continuation duration measured in step S101 is reset to zero. Subsequently, in step S107, the lock control and the lock maintenance control are performed according to a lock maintenance request from the flight control device 40.

As described above, the lock control device according to the present embodiment includes the anti-freeze control unit according to steps S104 and S105. The anti-freeze control by the anti-freeze control unit is performed to prevent freezing during a lock maintenance control period. According to the above, dissipation of moisture that is adhered to mechanical operating parts is expected. Therefore, freezing of mechanical operating parts and liquid refrigerant is preventable in advance during the lock maintenance control period. The mechanical operating parts include the lock device 100 and the above-mentioned bearings.

Further, when the EPU 50 has a cooling structure that cools the motor device 60 and the inverter device 80 with liquid refrigerant, the anti-freeze control causes the stagnant liquid refrigerant to flow. When the circulation of the liquid refrigerant is stopped for a long time, the liquid refrigerant in the portion of the circulation path exposed to the low-temperature outside air will reach its lowest temperature, increasing the concern of freezing. In consideration of such point, the anti-freeze control is performed during the lock maintenance control period in the present embodiment. Therefore, the stagnant liquid refrigerant temporarily flows, and rise of the temperature of the liquid refrigerant at the location with the lowest temperature is facilitated. Therefore, freezing is preventable in advance.

Further, in the present embodiment, the anti-freeze control unit temporarily releases the lock maintenance control, and then operates the propeller 20. Specifically, after the lock is released in step S104, the rotation control is performed in step S105. Therefore, in addition to preventing the lock pin 101 and the shaft groove 55 from freezing by unlocking, the subsequent rotation control can also prevent the parts related to the rotation of the propeller 20, such as the bearings, from freezing.

Further, in the present embodiment, the anti-freeze control unit energizes the motor 61 in a manner that does not affect the flight state. Therefore, it is possible to prevent freezing without a crew of the eVTOL 10 feeling any change in the flight state.

### (Eighth Embodiment)

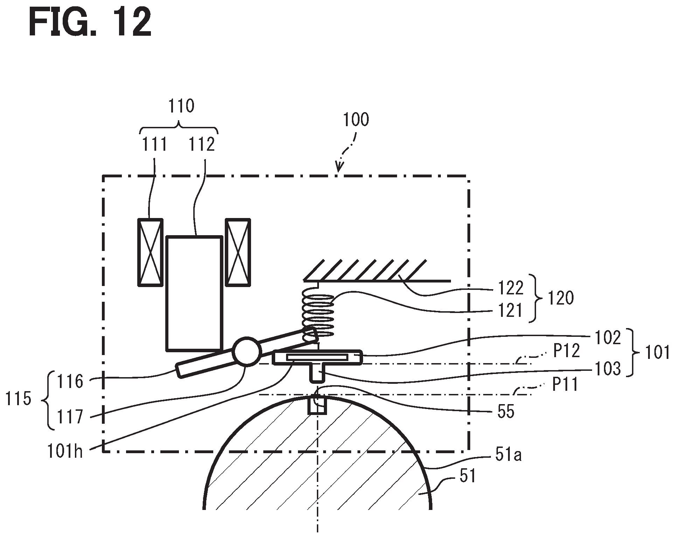

In the present embodiment, a heater 101h shown in FIG. 12 is provided as a countermeasure against the above-mentioned freezing. The heater 101h is disposed at a target position of anti-freezing. The heater 101h is an electric heater that generates heat when energized. An inverter control unit 82 controls the on/off of the energization to the heater 101h. In an example shown in FIG. 12, the heater 101h is attached to a lock pin 101. The heater 101h may be attached to a mechanical operating part such as a bearing or the like. Alternatively, it may be attached to a circulation path of the liquid refrigerant.

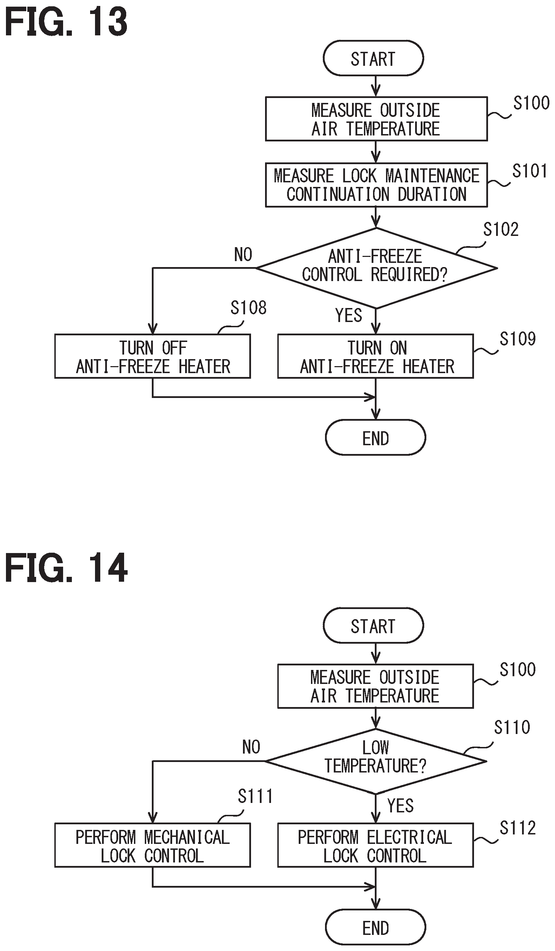

In the present embodiment, an inverter device 80 performs the process shown in FIG. 13 to perform countermeasures against freezing. Note that the explanation for FIG. 11 is cited for the processes having the same reference numerals as in FIG. 11. The process of FIG. 13 is performed continuously during a period in which the lock maintenance control is being required.

In the process shown in FIG. 13, when it is determined in step S102 that the anti-freeze control is not required, the anti-freeze heater 101h is turned OFF subsequently in step S108. On the other hand, when it is determined that anti-freeze control is required, the anti-freeze heater 101h is turned ON subsequently in step S109. The inverter control unit 82 when performing the process of step S109 corresponds to an "anti-freeze control unit."

In step S109, an ON state may be continued, or switching of ON and OFF states may be repeated intermittently. Alternatively, ON and OFF repeatedly at regular intervals, and the intervals may be changed according to conditions related to the susceptibility to freezing, such as the outside air temperature. The more likely the conditions are to freeze, the shorter the off interval should be.

When the outside air temperature is low, that is, equal to or lower than a predetermined temperature, the heater 101h may be kept on at all times. However, according to the present embodiment, in which the heater 101h is turned on only on condition that it is determined in step S102 that the anti-freeze control is required, electric power consumption can be reduced compared to a case where the heater 101h is always on.

As described above, the EPU 50 according to the present embodiment includes the heater 101h for preventing freezing. The lock control device according to the present embodiment includes an anti-freeze control unit which corresponds to step S109. The anti-freeze control is performed during the lock maintenance control period to prevent freezing. In such manner, by using the heater 101h to heat the position that may freeze during the lock maintenance control, the mechanically operating parts and the liquid refrigerant are prevented from freezing during the lock maintenance control period.

### (Ninth Embodiment)

In the present embodiment, an inverter device 80 performs the process shown in FIG. 14 for performing countermeasures against freezing. The explanation of the processes indicated by the same reference numerals as those in the previously described drawings is cited from the previously described portion. The process of FIG. 14 is performed continuously during a period in which the lock maintenance control is being required.

In the process shown in FIG. 14, it is determined in step S110 whether the outside air temperature is low. For example, when the temperature is 0 degree Celsius or lower, it is determined as a low temperature. In consideration of the information that the freezing temperature varies according to the flight altitude, the threshold value for determining low temperatures may be lowered as the flight altitude increases. When it is determined that the temperature is not low, the mechanical lock control is performed subsequently in step S111. When it is determined that the temperature is low, the electrical lock control is performed subsequently in step S112. An inverter control unit 82 when performing the process of step S112 corresponds to an "anti-freeze control unit."

Here, a mechanical lock requires less energy to maintain the lock than an electrical lock. However, because the locking is achieved by mechanical contact, there is a concern of freezing at a contact portion. In contrast, with an electrical lock, the number of mechanical contact points is not increased, thereby reducing the risk of freezing compared to a mechanical lock. Further, since a torque is continuously applied to a motor 61 to an extent of not operating a propeller 20, the motor 61 and an inverter 81 themselves also function as heaters by generating heat, making them less likely to freeze. Therefore, according to the present embodiment, which selects the electrical lock when the temperature is low, the risk of freezing can be reduced.

In short, the anti-freeze control unit corresponding to step S112 switches from mechanical locking by the first lock device to electrical lock by the second lock device. Therefore, as described above, the risk of freezing can be reduced due to heat generation by the electric parts.

### (Tenth Embodiment)

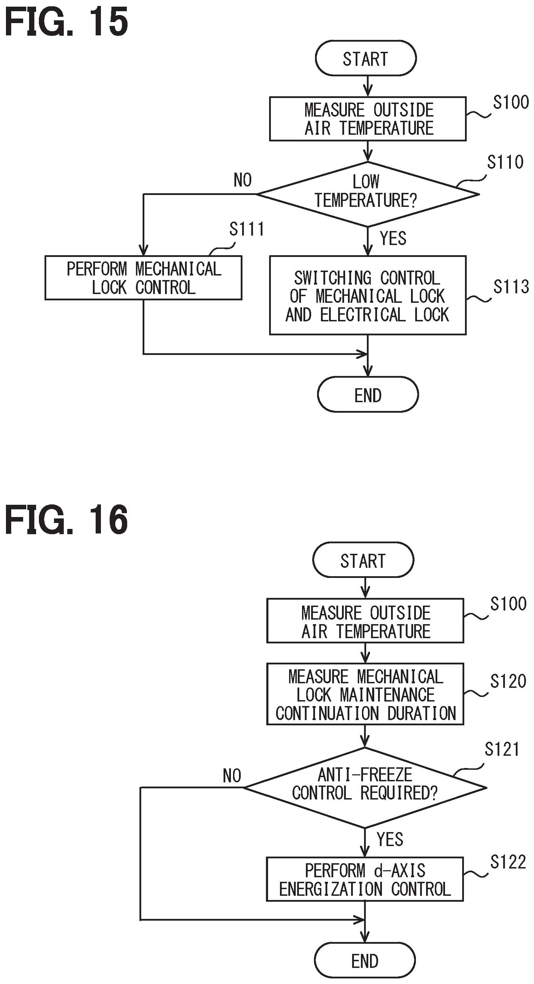

In the present embodiment shown in FIG. 15, the process of step S112 in FIG. 14 is changed to step S113. In step S113, when it is determined that the temperature is low, the mechanical lock and the electrical lock are switched at predetermined time intervals. An inverter control unit 82 when performing the process of step S113 corresponds to an "anti-freeze control unit."

It is also possible to eliminate the low temperature determination process in step S110, and switching between the mechanical lock control and the electrical lock control may be regularly performed. Alternatively, a propeller 20 may be fixed or rotated during the electrical lock control according to weather conditions such as temperature, humidity, rain, snow and the like. Further, a motor device 60 may be alternately driven forward and backward to vibrate.

In short, the anti-freeze control unit in step S113 switches from mechanical lock by the first lock device to electrical lock by the second lock device multiple times at predetermined time intervals. Therefore, as described above, the risk of freezing can be reduced due to heat generation by the electric parts.

### (Eleventh Embodiment)

In the present embodiment shown in FIG. 16, first, the outside air temperature is measured in step S100. Subsequently, in step S120, the duration during which the mechanical lock maintenance control is continued is measured. Subsequently, in step S121, it is determined whether or not the anti-freeze control is required based on the outside air temperature and the lock maintenance continuation duration acquired by the above-mentioned measurements.

In step S121, similarly to step S102 in FIG. 11, it is determined that the anti-freeze control is required, for example, when the outside air temperature is 0 degree Celsius or lower and the lock maintenance continuation duration is equal to or longer than a predetermined period of time.

When it is determined in step S121 that the anti-freeze control is required, a motor 61 is energized by d-axis energization control subsequently in step S122. The d-axis energization control is a control for supplying electric current through the motor 61 to generate heat while not generating torque in the motor 61. When the d-axis energization is performed, the motor 61 does not generate a rotational force. Therefore, even in a mechanically locked state, the motor 61 can be energized without putting a mechanical load on the motor 61 and a lock device 100. The inverter control unit 82 when performing the process of step S122 corresponds to an "anti-freeze control unit."

In step S122, the d-axis energization may be continued, or may be repeatedly turned on and off intermittently. Alternatively, the d-axis energization may be turned on and off repeatedly at regular intervals, and the intervals may be changed according to conditions related to the susceptibility to freezing, such as the outside air temperature. The more likely the conditions are to freeze, the shorter a d-axis deenergization interval should desirably be. Further, before or simultaneously with the d-axis energization, the cooling performance by the liquid refrigerant may be suppressed.

As described above, the lock control device according to the present embodiment includes an anti-freeze control unit according to step S122. According to the above, the motor 61 and the inverter 81 themselves also function as heaters by generating heat. Therefore, freezing of mechanical operating parts and liquid refrigerant is preventable in advance during the lock maintenance control period.

### (Twelfth Embodiment)

In the seventh to eleventh embodiments described above, control for preventing freezing (anti-freeze control) is performed to prevent freezing in advance. In contrast to the above, in the present embodiment, after the device is frozen, ice-break control is performed to break the ice.

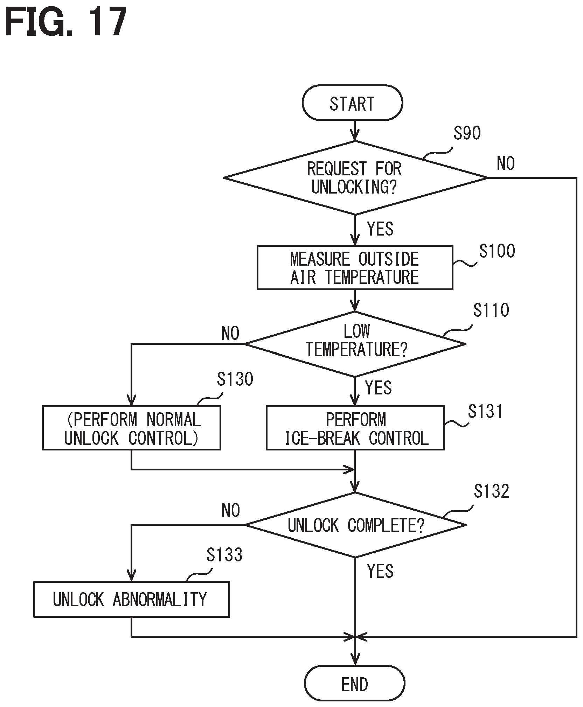

The process of the present embodiment shown in FIG. 17 is continuously performed by an inverter device 80 during a period in which the lock maintenance control is being required. First, in step S90, it is determined whether or not there is a request for unlocking. The request for unlocking is an instruction output from a flight control device 40 to the inverter device 80.

When it is determined that there is a request for unlocking, the outside air temperature is measured subsequently in step S100. Subsequently, in step S110, it is determined whether the outside air temperature is low. In such determination, similar to FIG. 14, for example, when the temperature is 0 degree Celsius or lower, it is determined that the temperature is low. When it is determined that the temperature is not low, normal unlock control is performed subsequently in step S130. On the other hand, when it is determined that the temperature is low, then in step S131, ice-break control, which is a different unlock control from the normal unlock control, is performed. The inverter control unit 82 when performing the process of step S131 corresponds to an "ice-break control unit."

Beside considering the outside air temperature and the lock maintenance continuation duration, other factors such as humidity, weather (rain, etc.), and the like may also be additionally considered as the determination conditions in step S110. Also, the duration of the predetermined period of time used for the above determination may be changed according to the outside air temperature, humidity, weather (rain, etc.), and the like. Since freezing occurs more easily at low temperatures and high humidity, the predetermined period of time may be set to a shorter time at low temperatures and high humidity, for example.

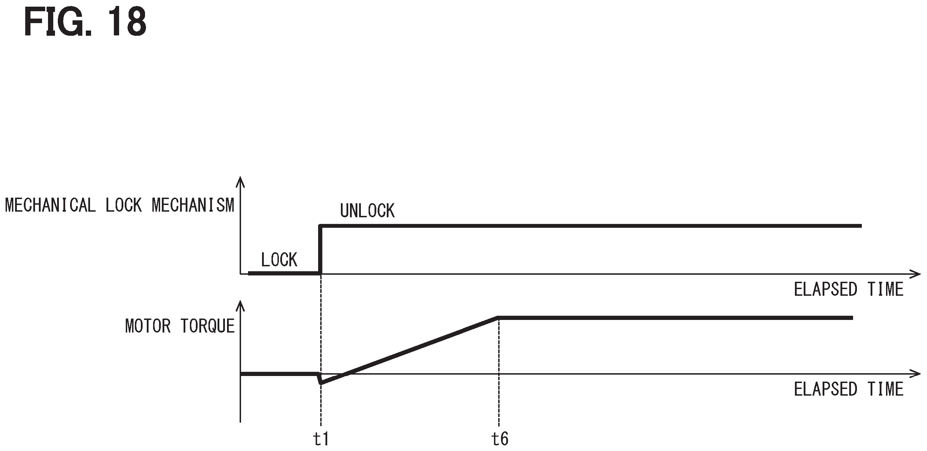

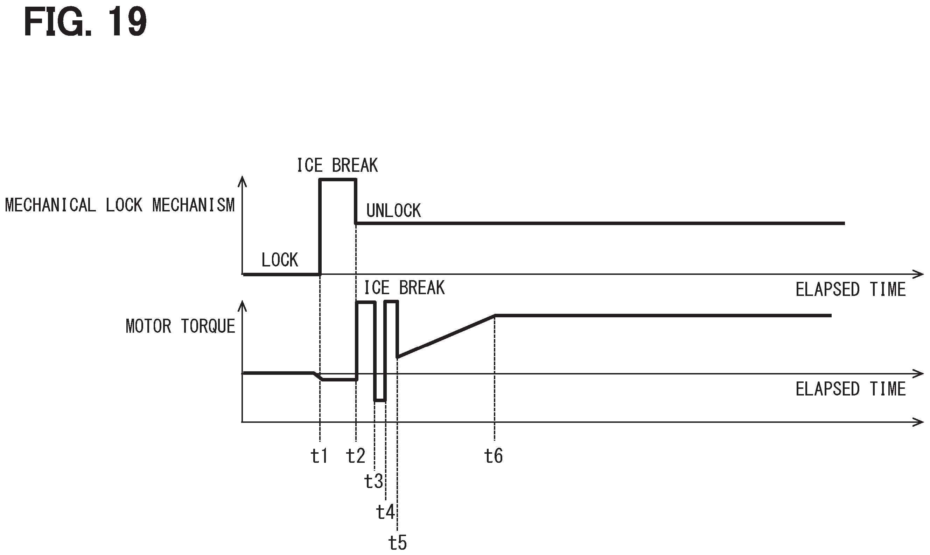

Hereinafter, the normal unlock control and the ice-break control will be described in details with reference to FIGs. 18 and 19. The upper part of these drawings shows the control relating to the mechanical lock mechanism, and indicates a magnitude of energization to a solenoid coil 111. The lower part of these drawings shows a magnitude of energization to a motor 61. The horizontal axis of these drawings indicates an elapsed time, and up to time t1, the locked state is maintained by the mechanical lock maintenance control.

As shown in FIG. 18, in the normal unlock control, up until time t1 when an unlocking request is made, the mechanical lock is being performed and the motor torque is controlled to zero. Further, since the mechanical lock is in effect until time t1, the energization to the solenoid coil 111 is controlled to zero. Then, at time t1, energization to the solenoid coil 111 is started, and the unlocked state is maintained by continuing the energization.

Here, even when no torque is applied to the motor 61, a propeller 20 receives torque due to the flight wind. Therefore, it is desirable to make it possible for a lock pin 101 to easily come off a shaft groove 55 and to prevent the propeller 20 from suddenly rotating immediately after coming-off of the lock pin 101. Therefore, from immediately before to immediately after time t1 at which unlock is caused, the motor 61 is controlled to generate a torque to offset the torque caused by the flight wind. For example, the motor 61 generates a counter torque in a direction that reverses the rotation of the propeller 20. Thereafter, in order to prevent a sudden change in torque, the motor torque is gradually increased until time t6.

In the ice-break control shown in FIG. 19, the mechanical lock is maintained until time t1 when a request for unlocking is made, and the motor torque is controlled to zero. Further, since the mechanical lock is in effect until time t1, the energization to the solenoid coil 111 is controlled to zero. Then, at time t1, energization to the solenoid coil 111 is started, and the unlocked state is maintained by continuing the energization.

However, from the start of energization until time t2, higher output of electric power is supplied than in the normal unlock control. In short, the lock pin 101 is intended to be actuated vigorously by high-power electric current in a short time immediately after the start of energization. In such manner, break up of the ice that is fastening the lock pin 101 and the shaft groove 55 is intended. It should be noted that the ice may also be broken by repeatedly turning ON and OFF the energization to the solenoid coil 111 immediately after the start of energization. In such case, it is desirable to repeatedly turn the energization ON and OFF at high output.

When energizing the motor 61 for the ice-break control, after time t2 at which it is expected to unlock, the motor 61 is energized to generate a motor torque that causes the motor to vibrate by alternating between forward and reverse rotation. For example, a forward rotation torque is generated from time t2 to time t3, and a reverse rotation torque is generated thereafter from time t3 to time t4, and then the forward rotation torque is generated thereafter from time t4 to time t5. In a period from time t5 to time t6, the motor torque is gradually increased to prevent a sudden change in torque.

In short, the energization control of the lock device 100 from time t1 to time t2 corresponds to the ice-break control in which the lock pin 101 is a target of ice breaking. The energization control to the motor 61 from time t2 to time t6 corresponds to the ice-break control in which the bearings and the like are the targets of ice breaking.

Returning to the explanation of FIG. 17, after steps S130 and S131, it is determined in step S132 whether or not unlocking has been complete. For example, when the rotation speed of the propeller 20 remains at zero, it is determined that unlocking has not been complete. When it is determined that the unlocking has not been complete, then in step S133, it is assumed that an unlock abnormality has occurred due to freezing or the like, and an unlock abnormality flag is set to ON. Then, the inverter control unit 82 or the flight control device 40 stores information indicating that an unlock abnormality has occurred. In such case, the flight control device 40 adjusts the output of the other normal EPUs 50 to continue flight control while stabilizing the aircraft posture.

Note that the control shown in FIG. 17 may be continuously performed when freezing conditions that tend to cause freezing, such as low temperatures, are satisfied. Alternatively, the normal unlock control may be attempted first, and when unlocking is not possible or when unlocking is successful but the propeller 20 does not rotate, the control of FIG. 17 may be performed.

Alternatively, it may be determined whether or not to perform the control of FIG. 17 based on the history of the outside air temperature and weather conditions from the start of locking to the present. For example, when the temperature remains below 0 degree Celsius for a long period of time while the lock is in effect, the device may be frozen even when the outside air temperature exceeds 0 degree Celsius when a request for unlocking is made. In consideration of such point, the duration of time during which the freezing condition that may possibly cause freezing has continued after the start of locking may be measured, and whether or not to perform the control of FIG. 17 may be determined according to the measured duration. Further, even when there is a history of the freezing condition that may possibly have caused freezing continuing for a long period of time, when a sufficient amount of time has elapsed since the condition was resolved, the normal unlock control may be selected.

As described above, the lock control device according to the present embodiment includes the ice-break control unit according to step S131. According to the above, breaking the ice on the frozen device is expected.

### (Thirteenth Embodiment)

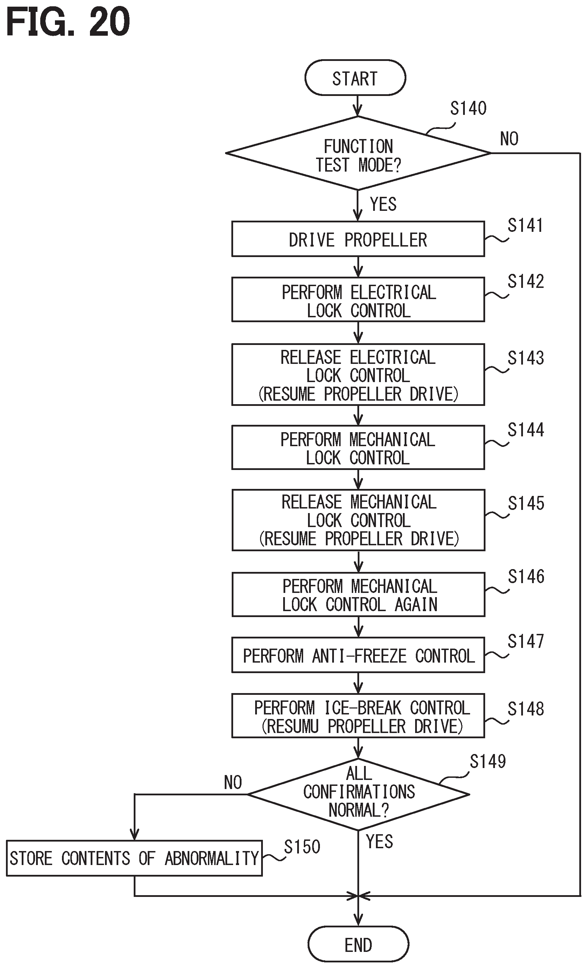

In the present embodiment shown in FIG. 20, the above-described anti-freeze control and the ice-break control are performed in a function test mode to check whether these controls are operating normally. Inspections using the function test mode are performed on the ground before take-off and after landing of an eVTOL 10. Alternatively, inspections may be performed on an EPU 50 that is not generating thrust during flight. For example, inspections are performed for the vertical take-off EPU 50 that is stopped during horizontal flight.

The inspections using the function test mode include the following items. That is, inspections check whether input voltages and output values to and from various sensors, control devices, and actuators, as well as the operations in response to instructions from the control devices, are within the control range as designed. Further, the inspections include propeller lock control, unlock control, anti-freeze control and ice-break control.

The process of FIG. 20 is performed by an inverter control unit 82 in accordance with an instruction output from an inspection device (not shown). In the process of FIG. 20, first, in step S140, it is determined whether or not the mode is the function test mode. For example, when an instruction to perform the function test mode is received from the inspection device, it is determined that the function test mode is in effect.

Subsequently, in step S141, the motor 61 is energized to confirm whether a propeller 20 is driven to rotate normally. At such time, it is desirable to rotate the propeller 20 at a speed slow enough not to generate thrust.

Subsequently, in step S142, the electrical lock control is performed to confirm whether the electric lock is normally performable. Subsequently, in step S143, control is performed to release the electrical lock control. Then, by confirming whether drive of the propeller 20 resumes, it is confirmed whether the electrical lock has been released normally.

Subsequently, in step S144, the mechanical lock control is performed to confirm whether the mechanical lock is normally performable. Subsequently, in step S145, control is performed to release the mechanical lock control. Then, by confirming whether drive of the propeller 20 resumes, it is confirmed whether the mechanical lock has been released normally.

Subsequently, in step S146, the mechanical lock control is performed again. Subsequently, in step S147, the anti-freeze control is performed, and it is confirmed whether or not the control is normally performable. Subsequently, in step S148, the ice-break control is performed to confirm whether the control is normally performable.

When it is determined subsequently in step S149 that all of the above-described confirmations are normal, the process of FIG. 20 ends. When an abnormality is found in at least one of the confirmations, the contents of the abnormality are stored in step S150. The contents of abnormality may be stored in any of the inspection device, the inverter control unit 82, and a flight control device 40.

### (Other Embodiments)

The present disclosure of the description is not restricted to the embodiments shown as examples. The present disclosure includes embodiments described above and modifications of the above-described embodiments made by a person skilled in the art. For example, the present disclosure is not limited to a combination of components and elements described in the embodiments, and various modifications may be implemented. The present disclosure may be implemented in various combinations thereof. The present disclosure may have additional components that can be added to the embodiments. The present disclosure encompasses the omission of parts and elements of the embodiments. The present disclosure encompasses replacement or combination of the parts and elements between one embodiment and another. The disclosed technical scope is not limited to the description of the embodiments. The disclosed technical scope is indicated by the description of the claims, and should be construed to include all changes within the meaning and range equivalent to the description of the claims.

In the first to third embodiments, similarly to the fourth to sixth embodiments, both of a mechanical lock device and an electrical lock device may be provided. Alternatively, the mechanical lock device may be eliminated and replaced with the electrical lock device.

The first to fifth embodiments and the sixth embodiment may be combined as appropriate. For example, when locking is not possible even after performing the processes shown in FIGs. 5 to 9, multiple inverter control units 82 may cooperatively perform lock control as shown in FIG. 10.

When the propeller 20, which is not driven to rotate, is left unlocked, the propeller 20 may spin freely, which may shorten the lifespan of the propeller 20 and the motor 61 or induce a malfunction. Therefore, the lock control may be performed on the propellers 20 that cannot be driven to rotate by the motor 61 due to a malfunction or the like, or on the propellers 20 that are normal but not driven to rotate.

In each of the embodiments described above, the rotation sensor 52 may detect any rotation as long as a propulsion control device such as the inverter control unit 82 can acquire the rotation number of the propeller. For example, the rotation sensor 52 may directly detect the rotation of the propeller 20 or may detect the rotation of the motor shaft 65.

In each of the embodiments described above, the eVTOL 10 may be not a tilt-rotor aircraft. That is, the eVTOL 10 may be not capable of tilting the propeller 20. For example, the eVTOL 10 may be provided with the multiple propellers 20 including both of a propeller 20 for the lift and a propeller 20 for the cruise. In such eVTOL 10, for example, the propeller 20 for the lift is driven when ascending, and the propeller 20 for the cruise is driven when moving forward.

In each of the embodiments described above, the aircraft on which the EPU 50 is mounted does not have to be a vertical take-off and landing aircraft. For example, the aircraft may be a rotary-wing aircraft, or a fixed-wing aircraft. The aircraft may be an unmanned aircraft carrying no person.

The lock control device according to each of the embodiments described above is premised on including multiple control devices 80. In contrast, a lock control device that has at least one of the anti-freeze control and the ice-break control is not limited to a configuration that includes multiple control devices 80, and may have only one control device 80.

In each of the embodiments described above, the flight control device 40 is implemented by a control system including at least one computer. The control system includes at least one processor that is hardware. When the processor is referred to as a hardware processor, the hardware processor can be implemented by (i), (ii), or (iii) to be described below.
(i) The hardware processor may be a hardware logic circuit. In such case, the computer is implemented by a digital circuit including many programmable logic units. Each of the logical units is, for example, a gate circuit. The digital circuit may include a memory in which at least one of a program and data is stored. The computer may be implemented by an analog circuit. The computer may be provided as a combination of a digital circuit and an analog circuit.
(ii) The hardware processor may be at least one processor core that executes a program stored in at least one memory. In such case, the computer includes at least one memory and at least one processor core. The processor core is referred to as a CPU, for example. The memory may also be referred to as a storage medium. The memory is a non-transitory, tangible storage medium non-temporarily storing "at least one of a program and data" readable by the processor.
(iii) The hardware processor may be a combination of the above item (i) and the above item (ii). The above items (i) and (ii) are disposed on different chips or on a common chip.

That is, at least one of means and functions provided by the flight control device 40 can be provided by hardware alone, software alone, or a combination thereof.

### (Disclosure of Technical Idea)

The specification of the present disclosure discloses multiple technical ideas described in multiple items listed below. Some ideas may be described in a multiple dependent form, in which subsequent ideas alternatively refer to preceding ideas. Some ideas may be described in a multiple dependent form referring to another multiple dependent form. These ideas described in a multiple dependent form define multiple technical ideas.

### (Technical Idea 1)

A lock control device is applied to an electric aircraft (10) having a passenger compartment or a luggage compartment in an airframe and being configured to fly with a propeller (20) rotated by an electric motor (61). The lock control device includes multiple control devices (80, 80A, 80B) provided for one motor, each of which is capable of controlling the one motor. In this case, each of the multiple control devices has a lock control unit (S10, S16, S16e, S10a, S10b) configured to control a lock device (100) that locks the propeller in a non-rotatable state, and one of the multiple control devices is configured to perform a lock control of the lock control unit in response to a lock request from an external device.

### (Technical Idea 2)

In the lock control device according to Technical Idea 1, when a first control device among the multiple control devices performs the lock control and the locking is not complete normally, a second control device among the multiple control devices performs the lock control.

### (Technical Idea 3)

In the lock control device according to Technical Idea 1 or 2, a first control device among the multiple control devices is configured to perform the lock control, and a second control device among the multiple control devices is configured to determine whether locking by the lock control has been complete normally.

### (Technical Idea 4)

In the lock control device according to any one of Technical Ideas 1 to 3, each of the multiple control devices has a lock maintenance control unit (S14, S20) configured to perform a lock maintenance control in which the propeller is maintained in a locked state, and the lock maintenance control unit is configured to perform the lock maintenance control in response to that locking is complete normally as a result of performing the lock control.

### (Technical Idea 5)

In the lock control device according to Technical Idea 4, one of the multiple control devices is configured to perform the lock maintenance control by the lock maintenance control unit.

### (Technical Idea 6)

In the lock control device according to Technical Idea 5, when a first control device among the multiple control devices performs the lock maintenance control resulting in (i) a failure to maintain the lock and (ii) unlocking, a second control device among the multiple control devices performs the lock control.

### (Technical Idea 7)

The lock control device according to any one of Technical Ideas 4 to 6 further includes an anti-freeze control unit (S104, S105, S109, S112, S113, S122) configured to prevent freezing while the lock maintenance control is being performed.

### (Technical Idea 8)

In the lock control device according to Technical Idea 7, the anti-freeze control unit is configured to temporarily release the lock maintenance control and to operate the propeller.

### (Technical Idea 9)

In the lock control device according to Technical Idea 7, the anti-freeze control unit is configured to operate a heater (101h) that heats a target position of anti-freezing.

### (Technical Idea 10)

In the lock control device according to Technical Idea 7, the anti-freeze control unit is configured to energize the motor in a state that does not affect a flight state of the electric aircraft.

### (Technical Idea 11)

In the lock control device according to Technical Idea 7, a plurality of the lock devices are provided for one propeller, a first lock device among the plurality of the lock devices is a device that mechanically locks the propeller by inhibiting rotation of the propeller with a lock member (101), a second lock device among the plurality of the lock devices is a device that locks the propeller by an electrical braking force of the motor, and the anti-freeze control unit is configured to switch from a mechanical lock due to the first lock device to an electrical lock due to the second lock device.

### (Technical Idea 12)

The lock control device according to Technical Idea 6 further includes: an ice-break control unit (S131) performing ice-break control to break ice in a situation where the ice is formed during performing the lock maintenance control at which time a request for unlocking is received; and a normal unlock control unit (S130) performing normal unlock control different from the ice-break control in a situation where no ice is formed and a request for unlocking is received.

### (Technical Idea 13)

In the lock control device according to Technical Idea 12, the ice-break control unit is configured to increase an amount of energization to the lock device or to the motor than a normal amount of energization.

### (Technical Idea 14)

In the lock control device according to any one of Technical Ideas 1 to 13, a plurality of the lock devices is provided for one propeller; at least one of the lock control units is configured to perform a lock control for the plurality of the lock devices; and when locking is not complete normally as a result of performing the lock control on a first lock device among the plurality of the lock devices, a second lock device among the plurality of the lock devices is configured to perform the lock control.

### (Technical Idea 15)

In the lock control device according to Technical Idea 14, the first lock device is a device that mechanically locks the propeller by inhibiting rotation of the propeller with a lock member (101), and the second lock device is a device that locks the propeller by an electrical braking force of the motor.

### (Technical Idea 16)

In the lock control device according to Technical Idea 15, when the lock control for the first lock device is performed by the first control device among the multiple control devices, the first control device is configured to further perform the lock control for the second lock device thereafter.

### (Technical Idea 17)

In the lock control device according to Technical Idea 15, when the first control device among the multiple control devices performs the lock control for the first lock device and the locking is not complete normally, the second control device among the multiple control devices performs the lock control for the second lock device.

## Claims

1. A lock control device to be applied to an electric aircraft (10) having a passenger compartment or a luggage compartment in an airframe and being configured to fly with a propeller (20) rotated by an electric motor (61), the lock control device comprising:
multiple control devices (80, 80A, 80B) provided for one motor, each of which is capable of controlling the one motor, wherein
each of the multiple control devices has a lock control unit (S10, S16, S16e, S10a, S10b) configured to control a lock device (100) that locks the propeller in a non-rotatable state, and
one of the multiple control devices is configured to perform a lock control of the lock control unit in response to a lock request from an external device.

2. The lock control device according to claim 1, wherein
when a first control device among the multiple control devices performs the lock control and the locking is not complete normally, a second control device among the multiple control devices performs the lock control.

3. The lock control device according to claim 1 or 2, wherein
a first control device among the multiple control devices is configured to perform the lock control, and
a second control device among the multiple control devices is configured to determine whether locking by the lock control has been complete normally.

4. The lock control device according to claim 1 or 2, wherein
each of the multiple control devices has a lock maintenance control unit (S14, S20) configured to perform a lock maintenance control in which the propeller is maintained in a locked state, and
the lock maintenance control unit is configured to perform the lock maintenance control in response to that locking is complete normally as a result of performing the lock control.

5. The lock control device according to claim 4, wherein
one of the multiple control devices is configured to perform the lock maintenance control by the lock maintenance control unit.

6. The lock control device according to claim 5, wherein
when a first control device among the multiple control devices performs the lock maintenance control resulting in (i) a failure to maintain the lock and (ii) unlocking, a second control device among the multiple control devices performs the lock control.

7. The lock control device according to claim 4, further comprising:
an anti-freeze control unit (S104, S105, S109, S112, S113, S122) configured to prevent freezing while the lock maintenance control is being performed.

8. The lock control device according to claim 7, wherein
the anti-freeze control unit is configured to temporarily release the lock maintenance control and to operate the propeller.

9. The lock control device according to claim 7, wherein
the anti-freeze control unit is configured to operate a heater (101h) that heats a target position of anti-freezing.

10. The lock control device according to claim 7, wherein
the anti-freeze control unit is configured to energize the motor in a state that does not affect a flight state of the electric aircraft.

11. The lock control device according to claim 7, wherein
a plurality of the lock devices are provided for one propeller,
a first lock device among the plurality of the lock devices is a device that mechanically locks the propeller by inhibiting rotation of the propeller with a lock member (101),
a second lock device among the plurality of the lock devices is a device that locks the propeller by an electrical braking force of the motor, and
the anti-freeze control unit is configured to switch from a mechanical lock due to the first lock device to an electrical lock due to the second lock device.

12. The lock control device according to claim 6, further comprising:
an ice-break control unit (S131) configured to perform an ice-break control to break ice in a situation where ice is formed during performing the lock maintenance control, when a request for unlocking is received; and
a normal unlock control unit (S130) configured to perform a normal unlock control different from the ice-break control in a situation where no ice is formed, when a request for unlocking is received.

13. The lock control device according to claim 12, wherein
the ice-break control unit is configured to increase an amount of energization to the lock device or to the motor than a normal amount of energization.

14. The lock control device according to claim 1 or 2, wherein
a plurality of the lock devices is provided for one propeller,
at least one of the lock control units is configured to perform a lock control for the plurality of the lock devices, and
when locking is not complete normally as a result of performing the lock control on a first lock device among the plurality of the lock devices, a second lock device among the plurality of the lock devices is configured to perform the lock control.

15. The lock control device according to claim 14, wherein
the first lock device is a device that mechanically locks the propeller by inhibiting rotation of the propeller with a lock member (101), and
the second lock device is a device that locks the propeller by an electrical braking force of the motor.

16. The lock control device according to claim 15, wherein
when the lock control for the first lock device is performed by the first control device among the multiple control devices, the first control device is configured to further perform the lock control for the second lock device thereafter.

17. The lock control device according to claim 15, wherein
when the first control device among the multiple control devices performs the lock control for the first lock device and the locking is not complete normally, the second control device among the multiple control devices performs the lock control for the second lock device.
